# EUROPEAN PATENT APPLICATION

(11) **EP 4 704 358 A1**
(43) Date of publication of application: **04.03.2026**
(21) Application number: 24795984.4
(22) Date of filing: 22.04.2024
(51) Int. Cl.: H04L 1/1812

(54) **METHOD AND APPARATUS USED IN NODE FOR WIRELESS COMMUNICATION**

(30) Priority: 24.04.2023 CN 202310449886
(71) Applicant: Apogee Networks, LLC, Dallas, TX 75201 (US)
(72) Inventor: LIU, Zheng, Shanghai 201206 (CN); ZHANG, Xiaobo, Shanghai 201206 (CN)
(74) Representative: Gunzelmann, Rainer
(86) International application number: PCT/CN2024/089012
(87) International publication number: WO 2024/222603

(57) **Abstract**

The present application discloses a method and an apparatus used in a node for wireless communication. A node receives a first information block and receives a second information block, the first information block being used to indicate a downlink symbol; and the node sends a first signal in a target time slot, the first signal being used for carrying HARQ-ACK bits comprised in a target HARQ bit set. The HARQ-ACK bits comprised in the target HARQ bit set belong to a first HARQ bit set, and the first HARQ bit set comprises HARQ-ACK bits for an SPS PDSCH. A first PUCCH resource is a PUCCH resource determined for the first HARQ bit set. The first PUCCH resource overlaps with one first-type symbol, and whether the downlink symbol indicated by the first information block belongs to the first-type symbol depends on the second information block. An SPS HARQ delay value corresponding to the target HARQ bit set is not less than a time interval length between the target time slot and a receiving time slot of the corresponding SPS PDSCH. By means of the present application, the delay is reduced.

## Description

### Technical Field

The present application relates to a transmission method and apparatus in a wireless communication system, in particular to a transmission scheme and apparatus for flexible transmission direction configuration in wireless communication.

### Background Art

Application scenarios of wireless communication systems in the future will become more and more diversified, and different application scenarios will put forward different performance requirements for the systems. In order to meet the different performance requirements of various application scenarios, the 3GPP (3rd Generation Partner Project) RAN (Radio Access Network) #72 plenary meeting decided to study the new radio (NR) technology (or 5G), a WI (Work Item) of the new radio (NR) technology was passed at the 3GPP RAN #75 plenary meeting, and standardization work on the NR was started. The 3GPP RAN #86 plenary meeting decided to start work on an SI (Study Item) and a WI (Work Item) for NR Rel-17, and an SI and a WI for NR Rel-18 are expected to be approved at the 3GPP RAN #94e plenary meeting.

In the new radio technology, enhanced mobile broadband (eMBB), ultra-reliable and low latency communications (URLLC), and massive machine type communications (mMTC) are three major application scenarios.

### Summary of the Invention

In existing NR systems, spectrum resources are statically divided into an FDD spectrum and a TDD spectrum. For the TDD spectrum, a base station and user equipment are both operated in a half-duplex mode. This half-duplex mode avoids a self-interference and can alleviate the impact of a cross link interference, but it also brings about a decrease in resource utilization rate and an increase in latency. In view of these problems, supporting a flexible duplex mode on the TDD spectrum or the FDD spectrum has become a possible solution.

In view of the problem of supporting HARQ-ACK (hybrid automatic repeat request-acknowledgement) transmission of an SPS (semi-persistent scheduling) PDSCH (physical downlink shared channel) in a flexible duplex mode, the present application discloses a solution. It should be explained that in the description of the present application, the flexible duplex mode is only used as one typical application scenario or example; and the present application is also applicable to other scenarios facing similar problems (e.g., scenarios in which there exist link direction changes, or other scenarios supporting multi-level configuration of transmission directions, or scenarios having base stations or user equipment of stronger capabilities, such as scenarios supporting in-band full duplex, or for different application scenarios, such as eMBB and URLLC), and can also achieve similar technical effects. In addition, the use of a unified solution for different scenarios (including but not limited to scenarios of eMBB and URLLC) also facilitates the reduction of hardware complexity and costs. In case of no conflict, embodiments and features in the embodiments in a first node device of the present application may be applied to a second node device, and vice versa. In particular, interpretations of terminologies, nouns, functions, and variables in the present application (if not otherwise specified) may refer to definitions in 3GPP specification protocol TS36 series, TS38 series, and TS37 series.

The present application discloses a method used in a first node for wireless communication, characterized by comprising:
receiving a first information block and receiving a second information block, the first information block being used for indicating at least one downlink symbol; and
sending a first signal in a target time slot, the first signal being used for carrying at least one HARQ-ACK bit comprised in a target HARQ bit set,
wherein the at least one HARQ-ACK bit comprised in the target HARQ bit set belongs to a first HARQ bit set, and the first HARQ bit set comprises at least one HARQ-ACK bit for an SPS PDSCH; a first PUCCH resource is a PUCCH resource determined for the first HARQ bit set; the first PUCCH resource overlaps with one first-type symbol, and whether the at least one downlink symbol indicated by the first information block belongs to the first-type symbol depends on the second information block; and an SPS HARQ delay value corresponding to the target HARQ bit set is not less than a time interval length between the target time slot and a receiving time slot of a corresponding SPS PDSCH.

As one embodiment, triggering delayed transmission of SPS HARQ-ACK bits by overlapping between a PUCCH and the first-type symbol reduces the probability that sending of an SPS HARQ-ACK is delayed and shortens latency.

As one embodiment, whether at least one downlink symbol indicated by the first information block belongs to the first-type symbol depends on the second information block, thereby supporting triggering of delayed transmission of an SPS HARQ-ACK when SBFD is configured.

According to one aspect of the present application, the above method is characterized in that the second information block is used for determining a first subband, and the first subband comprises at least one resource block; and at least one downlink symbol indicated by the first information block is used for uplink transmission in the first subband.

According to one aspect of the present application, the above method is characterized in that the first signal does not overlap with any downlink symbol other than the first-type symbol as indicated by the first information block, the first signal does not overlap with any SS/PBCH block symbol, and the first signal does not overlap with any control resource set symbol associated with a type-0 common search space set.

According to one aspect of the present application, the above method is characterized in that the second information block is used for indicating at least one symbol from a periodic time window, the periodic time window comprises a plurality of consecutive symbols, and a time length of the periodic time window is related to a time slot format configuration period length; and a downlink symbol indicated by the first information block that does not overlap with a symbol indicated by the second information block belongs to the first-type symbol.

According to one aspect of the present application, the above method is characterized by comprising:
receiving a third information block,
wherein the third information block is used for determining an SPS HARQ delay value of at least one SPS PDSCH configuration, and the SPS HARQ delay value corresponding to the target HARQ bit set is equal to an SPS HARQ delay value of an SPS PDSCH configuration corresponding to the target HARQ bit set.

According to one aspect of the present application, the above method is characterized in that the target time slot is an earliest time slot that multiplexes at least one bit from the first HARQ bit set.

According to one aspect of the present application, the above method is characterized in that a first HARQ-ACK bit is one HARQ-ACK bit comprised in the target HARQ bit set, an HARQ process to which the first HARQ-ACK bit belongs is associated with one PDSCH that is earlier than the first signal, and the first signal carries HARQ-ACK bits other than the first HARQ-ACK bit.

The present application discloses a method used in a second node for wireless communication, characterized by comprising:
sending a first information block and sending a second information block, the first information block being used for indicating at least one downlink symbol; and
receiving a first signal in a target time slot, the first signal being used for carrying at least one HARQ-ACK bit comprised in a target HARQ bit set,
wherein the at least one HARQ-ACK bit comprised in the target HARQ bit set belongs to a first HARQ bit set, and the first HARQ bit set comprises at least one HARQ-ACK bit for an SPS PDSCH; a first PUCCH resource is a PUCCH resource determined for the first HARQ bit set; the first PUCCH resource overlaps with one first-type symbol, and whether the at least one downlink symbol indicated by the first information block belongs to the first-type symbol depends on the second information block; and an SPS HARQ delay value corresponding to the target HARQ bit set is not less than a time interval length between the target time slot and a receiving time slot of a corresponding SPS PDSCH.

According to one aspect of the present application, the above method is characterized in that the second information block is used for determining a first subband, and the first subband comprises at least one resource block; and at least one downlink symbol indicated by the first information block is used for uplink transmission in the first subband.

According to one aspect of the present application, the above method is characterized in that the first signal does not overlap with any downlink symbol other than the first-type symbol as indicated by the first information block, the first signal does not overlap with any SS/PBCH block symbol, and the first signal does not overlap with any control resource set symbol associated with a type-0 common search space set.

According to one aspect of the present application, the above method is characterized in that the second information block is used for indicating at least one symbol from a periodic time window, the periodic time window comprises a plurality of consecutive symbols, and a time length of the periodic time window is related to a time slot format configuration period length; and a downlink symbol indicated by the first information block that does not overlap with a symbol indicated by the second information block belongs to the first-type symbol.

According to one aspect of the present application, the above method is characterized by comprising:
sending a third information block,
wherein the third information block is used for determining an SPS HARQ delay value of at least one SPS PDSCH configuration, and the SPS HARQ delay value corresponding to the target HARQ bit set is equal to an SPS HARQ delay value of an SPS PDSCH configuration corresponding to the target HARQ bit set.

According to one aspect of the present application, the above method is characterized in that the target time slot is an earliest time slot that multiplexes at least one bit from the first HARQ bit set.

According to one aspect of the present application, the above method is characterized in that a first HARQ-ACK bit is one HARQ-ACK bit comprised in the target HARQ bit set, an HARQ process to which the first HARQ-ACK bit belongs is associated with one PDSCH that is earlier than the first signal, and the first signal carries HARQ-ACK bits other than the first HARQ-ACK bit.

The present application discloses a first node device for wireless communication, characterized by comprising:
a first receiver receiving a first information block and receiving a second information block, the first information block being used for indicating at least one downlink symbol; and
a first transmitter sending a first signal in a target time slot, the first signal being used for carrying at least one HARQ-ACK bit comprised in a target HARQ bit set,
wherein the at least one HARQ-ACK bit comprised in the target HARQ bit set belongs to a first HARQ bit set, and the first HARQ bit set comprises at least one HARQ-ACK bit for an SPS PDSCH; a first PUCCH resource is a PUCCH resource determined for the first HARQ bit set; the first PUCCH resource overlaps with one first-type symbol, and whether the at least one downlink symbol indicated by the first information block belongs to the first-type symbol depends on the second information block; and an SPS HARQ delay value corresponding to the target HARQ bit set is not less than a time interval length between the target time slot and a receiving time slot of a corresponding SPS PDSCH.

The present application discloses a second node device for wireless communication, characterized by comprising:
a second transmitter sending a first information block and sending a second information block, the first information block being used for indicating at least one downlink symbol; and
a second receiver receiving a first signal in a target time slot, the first signal being used for carrying at least one HARQ-ACK bit comprised in a target HARQ bit set,
wherein the at least one HARQ-ACK bit comprised in the target HARQ bit set belongs to a first HARQ bit set, and the first HARQ bit set comprises at least one HARQ-ACK bit for an SPS PDSCH; a first PUCCH resource is a PUCCH resource determined for the first HARQ bit set; the first PUCCH resource overlaps with one first-type symbol, and whether the at least one downlink symbol indicated by the first information block belongs to the first-type symbol depends on the second information block; and an SPS HARQ delay value corresponding to the target HARQ bit set is not less than a time interval length between the target time slot and a receiving time slot of a corresponding SPS PDSCH.

### Brief Description of the Drawings

Other features, purposes and advantages of the present application will become more apparent from reading the detailed description of the non-limiting embodiments made with reference to the following drawings:
FIG. 1 shows a flowchart of a first information block, a second information block, and a first signal according to one embodiment of the present application;
FIG. 2 shows a schematic diagram of a network architecture according to one embodiment of the present application;
FIG. 3 shows a schematic diagram of a wireless protocol architecture for a user plane and a control plane according to one embodiment of the present application;
FIG. 4 shows a schematic diagram of a first node device and a second node device according to one embodiment of the present application;
FIG. 5 shows a flowchart of wireless signal transmission according to one embodiment of the present application;
FIG. 6 shows a schematic diagram of a first subband according to one embodiment of the present application;
FIG. 7 shows a schematic diagram of a first signal according to one embodiment of the present application;
FIG. 8 shows a schematic diagram of a periodic time window according to one embodiment of the present application;
FIG. 9 shows a schematic diagram of an SPS HARQ delay value according to one embodiment of the present application;
FIG. 10 shows a schematic diagram of a target time slot according to one embodiment of the present application;
FIG. 11 shows a schematic diagram of a first HARQ-ACK bit according to one embodiment of the present application;
FIG. 12 shows a structural block diagram of a processing apparatus in a first node device according to one embodiment of the present application; and
FIG. 13 shows a structural block diagram of a processing apparatus in a second node device according to one embodiment of the present application.

### Detailed Description of Embodiments

The technical solutions of the present application will be further described in detail below in conjunction with the drawings. It should be noted that, in case of no conflict, embodiments and features in the embodiments in the present application may be arbitrarily combined with each other.

### Embodiment 1

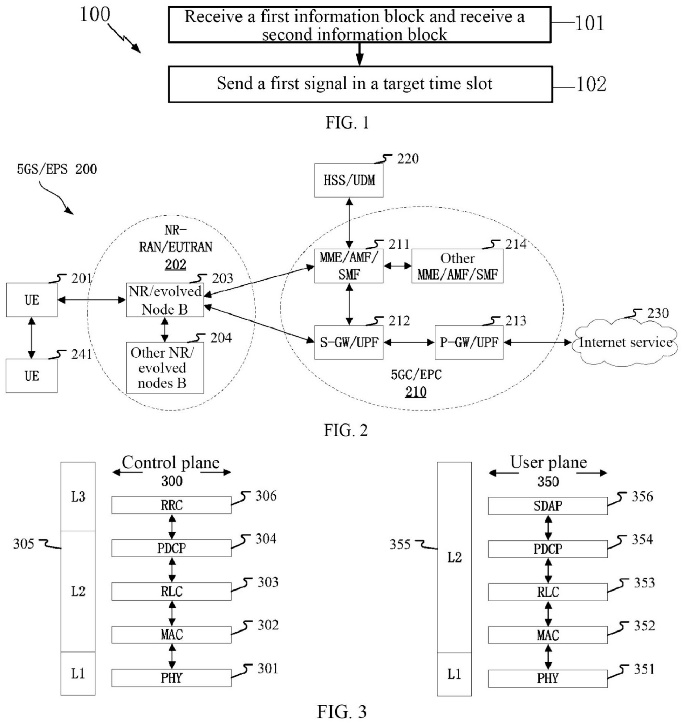

Embodiment 1 illustrates a flowchart 100 of a first information block, a second information block, and a first signal according to one embodiment of the present application, as shown in FIG. 1. In FIG. 1, each block represents one step. It is particularly needed to emphasize that the order of various blocks in the figure does not limit a temporal order of the steps represented.

In Embodiment 1, a first node device in the present application receives the first information block and receives the second information block in step 101, the first information block being used for indicating at least one downlink symbol; and the first node device in the present application sends the first signal in a target time slot in step 102, the first signal being used for carrying at least one HARQ-ACK bit comprised in a target HARQ bit set, wherein the at least one HARQ-ACK bit comprised in the target HARQ bit set belongs to a first HARQ bit set, and the first HARQ bit set comprises at least one HARQ-ACK bit for an SPS PDSCH; a first PUCCH resource is a PUCCH resource determined for the first HARQ bit set; the first PUCCH resource overlaps with one first-type symbol, and whether the at least one downlink symbol indicated by the first information block belongs to the first-type symbol depends on the second information block; and an SPS HARQ delay value corresponding to the target HARQ bit set is not less than a time interval length between the target time slot and a receiving time slot of a corresponding SPS PDSCH.

As one embodiment, the first information block is before the second information block.

As one embodiment, the first information block is after the second information block.

As one embodiment, the first information block is different from the second information block.

As one embodiment, the first information block and the second information block are transmitted through two different physical channels.

As one embodiment, the first information block and the second information block belong to fields of two parts in a same IE (Information Element) respectively.

As one embodiment, the first information block and the second information block belong to two different IEs respectively.

As one embodiment, a physical channel carrying the first information block and a physical channel carrying the second information block occupy different time-frequency resources.

As one embodiment, the first information block is transmitted through a PDSCH (Physical Downlink Shared Channel), the second information block is transmitted through a PDSCH (Physical Downlink Shared Channel), and the PDSCH carrying the first information block and the PDSCH carrying the second information block occupy different time-frequency resources.

As one embodiment, the first information block comprises higher-layer information or a higher-layer parameter configuration.

As one embodiment, the first information block comprises one or more IEs comprised in one RRC (Radio Resource Control) layer signaling, or the first information block comprises one or more fields comprised in one RRC layer signaling.

As one embodiment, the first information block comprises part of or all fields comprised in an MIB (Master Information Block).

As one embodiment, the first information block comprises part of or all fields comprised in one SIB (System Information Block).

As one embodiment, the first information block comprises part of or all fields comprised in an SIB1 (System Information Block 1).

As one embodiment, the first information block comprises part of or all the fields comprised in RMSI (Remaining Minimum System Information).

As one embodiment, the first information block is UE specific or UE dedicated.

As one embodiment, a configuration of a link direction comprised in the first information block is bandwidth part (BWP) common.

As one embodiment, a configuration of a link direction comprised in the first information block is applicable across BWPs.

As one embodiment, the first information block is cell common.

As one embodiment, the first information block is cell specific.

As one embodiment, the first information block is group common.

As one embodiment, a configuration of a link direction comprised in the first information block is applicable to an entire band occupied by a serving cell to which the first information block belongs.

As one embodiment, a configuration of a link direction comprised in the first information block is applicable to an entire carrier to which the first information block belongs.

As one embodiment, the first information block comprises physical layer control information or a physical layer control parameter.

As one embodiment, the first information block comprises part of or all fields in one DCI (Downlink Control Information) format.

As one embodiment, the first information block is transmitted through a PDCCH (Physical Downlink Control Channel).

As one embodiment, the first information block is used for determining an uplink/downlink TDD configuration.

As one embodiment, the first information block comprises part of or all fields in IE "ServingCellConfigCommon".

As one embodiment, the first information block comprises part of or all fields in IE "CellGroupConfig".

As one embodiment, the first information block comprises part of or all fields in IE "SpCellConfig".

As one embodiment, the first information block comprises part of or all fields in IE "ReconfigurationWithSync".

As one embodiment, the first information block comprises part of or all fields in IE "SCellConfig".

As one embodiment, the first information block comprises part of or all fields in IE "ServingCellConfigCommonSIB".

As one embodiment, the first information block comprises part of or all fields in IE "RRCSetup-IEs".

As one embodiment, the first information block comprises part of or all fields in IE "RRCResume-IEs".

As one embodiment, the first information block comprises part of or all fields in IE "tdd-UL-DL-ConfigCommon".

As one embodiment, the first information block comprises part of or all fields in IE "tdd-UL-DL-ConfigDedicated".

As one embodiment, the first information block comprises part of or all fields in IE "ServingCellConfig".

As one embodiment, the second information block comprises higher-layer information or a higher-layer parameter configuration.

As one embodiment, the second information block comprises one or more IEs (Information Elements) comprised in one RRC (Radio Resource Control) layer signaling, or the second information block comprises one or more fields comprised in one RRC layer signaling.

As one embodiment, the second information block comprises part of or all fields comprised in one SIB.

As one embodiment, the second information block is cell common.

As one embodiment, the second information block is cell specific.

As one embodiment, the second information block is group common.

As one embodiment, the second information block is UE specific or UE dedicated.

As one embodiment, the second information block is configured per subband.

As one embodiment, the second information block is configured per bandwidth part (BWP).

As one embodiment, the second information block comprises part of or all fields in IE "SBFDConfigDedicated".

As one embodiment, the second information block comprises part of or all fields in IE "SBFDConfigCommon".

As one embodiment, the second information block comprises part of or all fields in IE "SBFDConfig".

As one embodiment, the second information block comprises part of or all fields in IE "ServingCellConfigCommon".

As one embodiment, the second information block comprises part of or all fields in IE "CellGroupConfig".

As one embodiment, the second information block comprises part of or all fields in IE "SpCellConfig".

As one embodiment, the second information block comprises part of or all fields in IE "SCellConfig".

As one embodiment, the second information block comprises part of or all fields in IE "ServingCellConfigCommonSIB".

As one embodiment, the second information block comprises part of or all fields in IE "ServingCellConfig".

As one embodiment, the second information block comprises part of or all fields in a DCI format 2_N, and N is one non-negative integer.

As one embodiment, the second information block comprises part of or all fields in a DCI format 2_8.

As one embodiment, the second information block comprises part of or all fields in one DCI format.

As one embodiment, the second information block is transmitted on a PDCCH.

As one embodiment, the second information block is used for configuring a time slot or symbol for SBFD (subband full duplex).

As one embodiment, the second information block is used for configuring a time slot or symbol supporting full duplex.

As one embodiment, the technical feature of "the first information block being used for indicating at least one downlink symbol" comprises the following meaning: the first information block is used for indicating at least one downlink symbol by a second node device in the present application.

As one embodiment, the technical feature of "the first information block being used for indicating at least one downlink symbol" comprises the following meaning: all or part comprised in the first information block are or is used for explicitly or implicitly indicating at least one downlink symbol.

As one embodiment, the technical feature of "the first information block being used for indicating at least one downlink symbol" comprises the following meaning: the first information block is used for indicating at least one symbol and the first information block is used for indicating that a link direction of the at least one symbol is a downlink.

As one embodiment, the technical feature of "the first information block being used for indicating at least one downlink symbol" comprises the following meaning: the first information block is used for indicating that at least one symbol is a downlink symbol.

As one embodiment, the technical feature of "the first information block being used for indicating at least one downlink symbol" comprises the following meaning: the first information block is used for indicating at least one downlink symbol based on one reference subcarrier spacing.

As one embodiment, the technical feature of "the first information block being used for indicating at least one downlink symbol" comprises the following meaning: the first information block is used for indicating at least one downlink symbol within a period.

As one embodiment, the technical feature of "the first information block being used for indicating at least one downlink symbol" comprises the following meaning: the first information block is used for indicating a downlink time slot and a downlink symbol within a period.

As one embodiment, the technical feature of "the first information block being used for indicating at least one downlink symbol" comprises the following meaning: the first information block is used for indicating that at least one time slot within a period is a downlink time slot and/or at least one symbol within a period is a downlink symbol.

As one embodiment, the technical feature of "the first information block being used for indicating at least one downlink symbol" comprises the following meaning: the first information block is used for indicating at least one time slot format, and the at least one time slot format is used for determining at least one downlink symbol.

As one embodiment, the technical feature of "the first information block being used for indicating at least one downlink symbol" comprises the following meaning: the first information block is used for indicating at least one time slot that comprises only a downlink symbol and at least one downlink symbol after a time slot that comprises only a downlink symbol from one period.

As one embodiment, the technical feature of "the first information block being used for indicating at least one downlink symbol" comprises the following meaning: the first information block is used for indicating the number of starting downlink time slots, the number of downlink symbols immediately following the starting downlink time slots, and a period length with one period.

As one embodiment, the technical feature of "the first information block being used for indicating at least one downlink symbol" comprises the following meaning: the first information block is used for indicating at least one pattern, and any pattern indicated by the first information block provides one time slot configuration period length, the number of time slots that comprise only downlink symbols, the number of the downlink symbols, the number of time slots that comprise only uplink symbols, and the number of the uplink symbols.

As one embodiment, the technical feature of "the first information block being used for indicating at least one downlink symbol" comprises the following meaning: the first information block is used for indicating at least one pattern, and the at least one pattern indicated by the first information block provides at least one time slot that comprises only downlink symbols and at least one downlink symbol that does not belong to a time slot that comprises only downlink symbols in one period.

As one embodiment, the first information block is also used for indicating one reference subcarrier spacing, and the first information block indicates at least one downlink symbol based on the reference subcarrier spacing.

As one embodiment, any downlink symbol indicated by the first information block is an OFDM symbol.

As one embodiment, any downlink symbol indicated by the first information block comprises a cyclic prefix (CP) part and a data part.

As one embodiment, any downlink symbol indicated by the first information block comprises a cyclic prefix (CP) part and a part occupied by a modulation symbol.

As one embodiment, any downlink symbol indicated by the first information block is a time-domain symbol configured for downlink transmission.

As one embodiment, any downlink symbol indicated by the first information block is a time-domain symbol that is available for downlink transmission.

As one embodiment, the target time slot is a time slot that comprises a flexible symbol.

As one embodiment, the target time slot is a time slot that is indicated by the first information block and comprises only a downlink symbol.

As one embodiment, the target time slot is a time slot that is indicated by the first information block and comprises only an uplink symbol.

As one embodiment, the target time slot is a time slot that comprises both a downlink symbol indicated by the first information block and an uplink symbol indicated by the first information block.

As one embodiment, the target time slot is a time slot that is indicated by the first information block and comprises only a downlink symbol, and the target time slot comprises a symbol indicated to be available for uplink transmission by the second information block.

As one embodiment, the target time slot is a time slot that comprises a symbol which can be used for uplink transmission.

As one embodiment, the target time slot is a time slot that comprises an uplink symbol indicated by the first information block, or a flexible symbol indicated by the first information block, or an SBFD symbol indicated by the second information block.

As one embodiment, the target time slot is a time slot that comprises an uplink symbol indicated by the first information block or an SBFD symbol indicated by the second information block.

As one embodiment, the target time slot is a time slot that resolves overlapping between a PUCCH and a PUSCH.

As one embodiment, the target time slot is a time slot that resolves collision between a PUCCH and a PUSCH.

As one embodiment, the first signal is mapped to all symbols into the target time slot in the time domain.

As one embodiment, the first signal is mapped to part of symbols into the target time slot in the time domain.

As one embodiment, the first signal is a baseband signal or a radio frequency signal.

As one embodiment, the first signal is transmitted through an air interface or a wireless interface.

As one embodiment, the first signal is a PUCCH (Physical Uplink Control Channel) or a PUSCH (Physical Uplink Shared Channel).

As one embodiment, the first signal is a CG (Configured Grant) PUSCH.

As one embodiment, the first signal comprises a PUSCH and a DMRS (Demodulation Reference Signal).

As one embodiment, the first signal comprises a PUCCH and a DMRS.

As one embodiment, the target HARQ bit set comprises at least one HARQ-ACK bit.

As one embodiment, the target HARQ bit set comprises a plurality of HARQ-ACK bits.

As one embodiment, the target HARQ bit set comprises at least one information bit.

As one embodiment, the target HARQ bit set comprises all or part of bits in an HARQ-ACK codebook.

As one embodiment, all bits comprised in the target HARQ bit set belong to one HARQ-ACK codebook.

As one embodiment, the target HARQ bit set is an HARQ-ACK sub-codebook.

As one embodiment, bits comprised in the target HARQ bit set are appended into one HARQ-ACK codebook.

As one embodiment, the target HARQ bit set comprises all or part of bits in a Type1 or Type2 HARQ-ACK codebook.

As one embodiment, bits comprised in the target HARQ bit set are appended into one Type1 or Type2 HARQ-ACK codebook.

As one embodiment, any bit in the target HARQ bit set is a UCI (uplink control information) bit.

As one embodiment, any bit in the target HARQ bit set is an HARQ-ACK bit for an SPS PDSCH (semi-persistent scheduling physical downlink shared channel).

As one embodiment, any bit in the target HARQ bit set is an HARQ-ACK bit corresponding to one SPS PDSCH configuration.

As one embodiment, any bit in the target HARQ bit set is a deferred HARQ-ACK bit.

As one embodiment, the target HARQ bit set comprises all HARQ-ACK bits for an SPS PDSCH that fall within the target time slot.

As one embodiment, any bit in the target HARQ bit set is an HARQ-ACK bit generated in one time slot before the target time slot.

As one embodiment, any bit in the target HARQ bit set is an HARQ-ACK bit delayed from one time slot before the target time slot to the target time slot.

As one embodiment, any HARQ-ACK bit comprised in the target HARQ bit set is an uncoded HARQ-ACK bit.

As one embodiment, any HARQ-ACK bit comprised in the target HARQ bit set is a coded HARQ-ACK bit.

As one embodiment, the technical feature of "the first signal being used for carrying at least one HARQ-ACK bit comprised in a target HARQ bit set" comprises the following meaning: the first signal is used for carrying at least one HARQ-ACK bit comprised in the target HARQ bit set by the first node device in the present application.

As one embodiment, the technical feature of "the first signal being used for carrying at least one HARQ-ACK bit comprised in a target HARQ bit set" comprises the following meaning: at least one bit in the target HARQ bit set is transmitted on the first signal.

As one embodiment, the technical feature of "the first signal being used for carrying at least one HARQ-ACK bit comprised in a target HARQ bit set" comprises the following meaning: any bit in the target HARQ bit set is an information bit transmitted on the first signal.

As one embodiment, the technical feature of "the first signal being used for carrying at least one HARQ-ACK bit comprised in a target HARQ bit set" comprises the following meaning: at least one bit in the target HARQ bit set is mapped (or multiplexed) onto the first signal.

As one embodiment, the technical feature of "the first signal being used for carrying at least one HARQ-ACK bit comprised in a target HARQ bit set" comprises the following meaning: at least one bit in the target HARQ bit set is used for generating the first signal.

As one embodiment, the technical feature of "the first signal being used for carrying at least one HARQ-ACK bit comprised in a target HARQ bit set" comprises the following meaning: at least one bit in the target HARQ bit set is used for generating a UCI bit carried by the first signal.

As one embodiment, the technical feature of "the first signal being used for carrying at least one HARQ-ACK bit comprised in a target HARQ bit set" comprises the following meaning: UCI bits comprising at least one bit in the target HARQ bit set are used for generating the first signal.

As one embodiment, the technical feature of "the first signal being used for carrying at least one HARQ-ACK bit comprised in a target HARQ bit set" comprises the following meaning: the first signal is used for carrying all HARQ-ACK bits in the target HARQ bit set.

As one embodiment, the technical feature of "the first signal being used for carrying at least one HARQ-ACK bit comprised in a target HARQ bit set" comprises the following meaning: the first signal is used for carrying part of HARQ-ACK bits in the target HARQ bit set.

As one embodiment, the technical feature of "the first signal being used for carrying at least one HARQ-ACK bit comprised in a target HARQ bit set" comprises the following meaning: the first signal is used for carrying HARQ-ACK bits in the target HARQ bit set that are other than a first HARQ-ACK bit in the present application.

As one embodiment, bits in the target HARQ bit set are sequentially arranged.

As one embodiment, bits in the target HARQ bit set are sequentially indexed.

As one embodiment, the first signal carries only one HARQ-ACK codebook.

As one embodiment, the first signal carries a plurality of HARQ-ACK codebooks.

As one embodiment, the first signal carries only an HARQ-ACK bit comprised in the target HARQ bit set.

As one embodiment, UCI bits carried by the first signal comprise only an HARQ-ACK bit comprised in the target HARQ bit set.

As one embodiment, the first signal also carries an HARQ-ACK bit other than an HARQ-ACK bit comprised in the target HARQ bit set.

As one embodiment, the first signal also carries UCI bits other than an HARQ-ACK bit comprised in the target HARQ bit set.

As one embodiment, the first signal carries all HARQ-ACK bits comprised in the target HARQ bit set.

As one embodiment, the first signal carries part of HARQ-ACK bits comprised in the target HARQ bit set.

As one embodiment, the first HARQ bit set comprises only one HARQ-ACK bit for an SPS PDSCH.

As one embodiment, the first HARQ bit set comprises a plurality of HARQ-ACK bits for an SPS PDSCH.

As one embodiment, the first HARQ bit set comprises a plurality of HARQ-ACK bits.

As one embodiment, any HARQ-ACK bit comprised in the target HARQ bit set belongs to the first HARQ bit set.

As one embodiment, only one HARQ-ACK bit comprised in the target HARQ bit set belongs to the first HARQ bit set.

As one embodiment, part of HARQ-ACK bits comprised in the target HARQ bit set belong to the first HARQ bit set.

As one embodiment, the first HARQ bit set is the target HARQ bit set.

As one embodiment, the first HARQ bit set is different from the target HARQ bit set.

As one embodiment, the first HARQ bit set is identical to the target HARQ bit set.

As one embodiment, the first HARQ bit set comprises bits other than the target HARQ bit set.

As one embodiment, the first HARQ bit set comprises only bits in the target HARQ bit set.

As one embodiment, the first HARQ bit set comprises all or part of bits in an HARQ-ACK codebook.

As one embodiment, all bits comprised in the first HARQ bit set belong to one HARQ-ACK codebook.

As one embodiment, the first HARQ bit set is an HARQ-ACK sub-codebook.

As one embodiment, bits comprised in the first HARQ bit set are concatenated into one HARQ-ACK codebook.

As one embodiment, the first HARQ bit set comprises all or part of bits in the Type1 or Type2 HARQ-ACK codebook.

As one embodiment, bits comprised in the first HARQ bit set are concatenated into one Type1 or Type2 HARQ-ACK codebook.

As one embodiment, any bit in the first HARQ bit set is a UCI bit.

As one embodiment, any bit in the first HARQ bit set is an HARQ-ACK bit for an SPS PDSCH.

As one embodiment, any bit in the first HARQ bit set is an HARQ-ACK bit corresponding to one SPS PDSCH configuration.

As one embodiment, at least one bit comprised in the first HARQ bit set is an HARQ-ACK bit for a non-SPS PDSCH.

As one embodiment, any bit in the first HARQ bit set is delayed.

As one embodiment, the first HARQ bit set comprises at least one bit that is not delayed.

As one embodiment, bits in the target HARQ bit set comprised in the first HARQ bit set are delayed.

As one embodiment, any bit in the first HARQ bit set is an HARQ-ACK bit generated in one time slot before the target time slot.

As one embodiment, any HARQ-ACK bit comprised in the first HARQ bit set is an uncoded HARQ-ACK bit.

As one embodiment, any HARQ-ACK bit comprised in the first HARQ bit set is a coded HARQ-ACK bit.

As one embodiment, the first HARQ bit set comprises at least one HARQ-ACK bit that is originally to be transmitted in one time slot before the target time slot.

As one embodiment, the first HARQ bit set comprises at least one HARQ-ACK bit for an SPS PDSCH that is originally to be transmitted in one time slot before the target time slot.

As one embodiment, the first HARQ bit set comprises at least one HARQ-ACK bit for an SPS PDSCH that is originally to be transmitted on the first PUCCH resource.

As one embodiment, the first HARQ bit set comprises at least one HARQ-ACK bit for an SPS PDSCH that is originally to be mapped onto the first PUCCH resource.

As one embodiment, one HARQ-ACK bit for an SPS PDSCH is one HARQ-ACK bit used for indicating whether the SPS PDSCH is correctly decoded.

As one embodiment, one HARQ-ACK bit for an SPS PDSCH is one HARQ-ACK bit generated according to whether a TB (transport block) carried by the SPS PDSCH is correctly decoded.

As one embodiment, one HARQ-ACK bit for an SPS PDSCH is one bit in an HARQ-ACK sub-codebook for an SPS.

As one embodiment, one HARQ-ACK bit for an SPS PDSCH is one HARQ-ACK bit generated according to whether a TB (transport block) carried by the SPS PDSCH is correctly decoded or whether an SPS PDCCH is detected.

As one embodiment, the first PUCCH resource comprises a time-frequency resource.

As one embodiment, the first PUCCH resource comprises a time-frequency resource configured for PUCCH transmission.

As one embodiment, the first PUCCH resource corresponds to one PUCCH format, one starting symbol, one duration, one PRB offset value, and one cyclic shift index.

As one embodiment, the first PUCCH resource comprises a time-frequency resource and a sequence resource.

As one embodiment, the first PUCCH resource is not actually occupied by PUCCH transmission.

As one embodiment, the first PUCCH resource is a PUCCH resource that is configured but is not actually occupied by PUCCH transmission.

As one embodiment, the first PUCCH resource is one PUCCH resource configured through IE "PUCCH-Config".

As one embodiment, the first PUCCH resource is one PUCCH resource configured through IE "pucch-ResourceCommon".

As one embodiment, the first PUCCH resource is one PUCCH resource provided through IE "SPS-PUCCH-AN-List".

As one embodiment, the first PUCCH resource is one PUCCH resource provided through IE "n1PUCCH-AN".

As one embodiment, the first PUCCH resource is a PUCCH resource determined after resolving overlapping (or collision) between a PUCCH and a PUSCH.

As one embodiment, the first PUCCH resource belongs to one PUCCH resource set.

As one embodiment, the first PUCCH resource is configured by a signaling.

As one embodiment, a PUCCH resource set to which the first PUCCH resource belongs is configured by a signaling.

As one embodiment, the first PUCCH resource is determined from a PUCCH resource set to which the first PUCCH resource belongs according to a signaling indication.

As one embodiment, the first PUCCH resource is determined from a PUCCH resource set to which the first PUCCH resource belongs according to a signaling indication and an index of a starting CCE (control channel element) occupied by one PDCCH.

As one embodiment, the technical feature of "a first PUCCH resource is a PUCCH resource determined for the first HARQ bit set" comprises the following meaning: the first PUCCH resource is a PUCCH resource determined for the first HARQ bit set by the first node device in the present application.

As one embodiment, the technical feature of "a first PUCCH resource is a PUCCH resource determined for the first HARQ bit set" comprises the following meaning: the number of bits comprised in the first HARQ bit set is used for determining a PUCCH resource set to which the first PUCCH resource belongs.

As one embodiment, the technical feature of "a first PUCCH resource is a PUCCH resource determined for the first HARQ bit set" comprises the following meaning: the first PUCCH resource is a PUCCH resource for PUCCH transmission carrying the first HARQ bit set that would be reported.

As one embodiment, the technical feature of "a first PUCCH resource is a PUCCH resource determined for the first HARQ bit set" comprises the following meaning: the first PUCCH resource is a PUCCH resource for PUCCH transmission carrying the first HARQ bit set that would be reported in one time slot before the target time slot.

As one embodiment, the technical feature of "a first PUCCH resource is a PUCCH resource determined for the first HARQ bit set" comprises the following meaning: the first PUCCH resource is a PUCCH resource for PUCCH transmission carrying the first HARQ bit set that would be reported for a first time.

As one embodiment, the technical feature of "a first PUCCH resource is a PUCCH resource determined for the first HARQ bit set" comprises the following meaning: the number of UCI bits comprising the first HARQ bit set is used for determining the first PUCCH resource from a plurality of configured PUCCH resources.

As one embodiment, the technical feature of "a first PUCCH resource is a PUCCH resource determined for the first HARQ bit set" comprises the following meaning: the number of bits comprised in the first HARQ bit set is used for determining the first PUCCH resource from a plurality of configured PUCCH resources.

As one embodiment, the technical feature of "a first PUCCH resource is a PUCCH resource determined for the first HARQ bit set" comprises the following meaning: the number of UCI bits comprising the first HARQ bit set is used for determining a PUCCH resource set to which the first PUCCH resource belongs.

As one embodiment, the technical feature of "a first PUCCH resource is a PUCCH resource determined for the first HARQ bit set" comprises the following meaning: the number of UCI bits comprising the first HARQ bit set is used for determining a PUCCH resource set to which the first PUCCH resource belongs, and a signaling configuration determines the first PUCCH resource from the PUCCH resource set to which the first PUCCH resource belongs.

As one embodiment, the first-type symbol is a time-domain symbol that is not allowed for PUCCH transmission.

As one embodiment, the first-type symbol is a time-domain symbol that is not allowed for uplink transmission.

As one embodiment, the first-type symbol is a time-domain symbol that causes (or triggers) delay of an SPS HARQ.

As one embodiment, the first-type symbol is a time-domain symbol that can be used only for downlink reception.

As one embodiment, the first-type symbol is a time-domain symbol that is configured to be used only for downlink reception or is indicated for an SS/PBCH block or belongs to a control resource set associated with a type-0 common search space set.

As one embodiment, the first-type symbol is a time-domain symbol that is indicated as a downlink by "tdd-UL-DL-ConfigCommon" but is not indicated (or provided) by the second information block.

As one embodiment, the first-type symbol is a time-domain symbol that is indicated as a downlink by "tdd-UL-DL-ConfigCommon" but is not indicated as an SBFD symbol by the second information block.

As one embodiment, the first-type symbol is a time-domain symbol that is indicated as a downlink by "tdd-UL-DL-ConfigCommon" and for which the second information block is not provided, or for which the second information block is provided but is not indicated (or provided) by the second information block.

As one embodiment, the first-type symbol is a time-domain symbol that is indicated as a downlink by "tdd-UL-DL-ConfigDedicated" but is not indicated (or provided) by the second information block.

As one embodiment, the first-type symbol is a time-domain symbol that is indicated as a downlink by "tdd-UL-DL-ConfigDedicated" but is not indicated as an SBFD symbol by the second information block.

As one embodiment, the first-type symbol is a time-domain symbol that is indicated as a downlink by "tdd-UL-DL-ConfigDedicated" and for which the second information block is not provided, or for which the second information block is provided but is not indicated (provided) by the second information block.

As one embodiment, the first-type symbol is a time-domain symbol that is indicated as a downlink by "tdd-UL-DL-ConfigCommon" or "tdd-UL-DL-ConfigDedicated" but is not indicated (or provided) by the second information block.

As one embodiment, the first-type symbol is a time-domain symbol that is indicated as a downlink by "tdd-UL-DL-ConfigCommon" or "tdd-UL-DL-ConfigDedicated" but is not indicated as an SBFD symbol by the second information block.

As one embodiment, the first-type symbol is a time-domain symbol that is indicated as a downlink by "tdd-UL-DL-ConfigCommon" or "tdd-UL-DL-ConfigDedicated" and is non-SBFD.

As one embodiment, the first-type symbol is a time-domain symbol that is indicated as a downlink by "tdd-UL-DL-ConfigCommon" or "tdd-UL-DL-ConfigDedicated" and for which the second information block is not provided, or for which the second information block is provided but is not indicated (or provided) by the second information block.

As one embodiment, the first-type symbol is a time-domain symbol that is indicated as a downlink by "tdd-UL-DL-ConfigCommon" or "tdd-UL-DL-ConfigDedicated" but is not indicated (or provided) by the second information block, or is indicated for an SS/PBCH block, or belongs to a control resource set associated with the type-0 common search space set.

As one embodiment, the first-type symbol is a time-domain symbol that is indicated as a downlink by "tdd-UL-DL-ConfigCommon" or "tdd-UL-DL-ConfigDedicated" but is not indicated as an SBFD symbol by the second information block, or is indicated for an SS/PBCH block, or belongs to a control resource set associated with the type-0 common search space set.

As one embodiment, the first-type symbol is a time-domain symbol that is indicated as a downlink by "tdd-UL-DL-ConfigCommon" or "tdd-UL-DL-ConfigDedicated" and for which the second information block is not provided, or for which the second information block is provided but is not indicated (or provided) by the second information block, or belongs to a control resource set associated with the type-0 common search space set.

As one embodiment, the first-type symbol is a time-domain symbol triggering a procedure of determining the target time slot.

As one embodiment, overlapping between the first PUCCH resource and one first-type symbol is a condition for triggering a procedure of determining the target time slot.

As one embodiment, whether one symbol belongs to the first-type symbol is configured.

As one embodiment, any first-type symbol is an OFDM symbol.

As one embodiment, the technical feature of "the first PUCCH resource overlaps with one first-type symbol" comprises the following meaning: the first PUCCH resource comprises one first-type symbol in the time domain.

As one embodiment, the technical feature of "the first PUCCH resource overlaps with one first-type symbol" comprises the following meaning: the first PUCCH resource is non-orthogonal to one first-type symbol.

As one embodiment, the technical feature of "the first PUCCH resource overlaps with one first-type symbol" comprises the following meaning: one symbol comprised in a time-domain symbol comprised in the first PUCCH resource in the time domain is the first-type symbol.

As one embodiment, the technical feature of "the first PUCCH resource overlaps with one first-type symbol" comprises the following meaning: a time-domain resource occupied by the first PUCCH resource overlaps with a time-domain resource occupied by one first-type symbol.

As one embodiment, the technical feature of "the first PUCCH resource overlaps with one first-type symbol" comprises the following meaning: the first PUCCH resource overlaps with one or more first-type symbols in the time domain.

As one embodiment, the two expressions of "a symbol belongs to the first-type symbol" and "a symbol is the first-type symbol" are equivalent or may be used interchangeably.

As one embodiment, the two expressions of "a symbol belongs to the first-type symbol" and "a symbol is classified as the first-type symbol" are equivalent or may be used interchangeably.

As one embodiment, the technical feature of "whether at least one downlink symbol indicated by the first information block belongs to the first-type symbol depends on the second information block" comprises the following meaning: whether only one downlink symbol indicated by the first information block belongs to the first-type symbol depends on the second information block.

As one embodiment, the technical feature of "whether at least one downlink symbol indicated by the first information block belongs to the first-type symbol depends on the second information block" comprises the following meaning: whether a plurality of downlink symbols indicated by the first information block belong to the first-type symbol depends on the second information block.

As one embodiment, the technical feature of "whether at least one downlink symbol indicated by the first information block belongs to the first-type symbol depends on the second information block" comprises the following meaning: the second information block is used for determining whether at least one downlink symbol indicated by the first information block belongs to the first-type symbol.

As one embodiment, the technical feature of "whether at least one downlink symbol indicated by the first information block belongs to the first-type symbol depends on the second information block" comprises the following meaning: the second information block is used for indicating at least one symbol from a periodic time window, the periodic time window comprises a plurality of consecutive symbols, and a time length of the periodic time window is equal to a time slot format configuration period length; and any downlink symbol indicated by the first information block that does not overlap with a symbol indicated by the second information block belongs to the first-type symbol.

As one embodiment, the technical feature of "whether at least one downlink symbol indicated by the first information block belongs to the first-type symbol depends on the second information block" comprises the following meaning: the second information block is used for indicating at least one symbol from one time window, and any downlink symbol indicated by the first information block that does not overlap with a symbol indicated by the second information block belongs to the first-type symbol.

As one embodiment, the technical feature of "whether at least one downlink symbol indicated by the first information block belongs to the first-type symbol depends on the second information block" comprises the following meaning: the second information block is used for indicating at least one symbol according to a reference subcarrier spacing, any downlink symbol indicated by the first information block that does not overlap with a symbol indicated by the second information block belongs to the first-type symbol, and the reference subcarrier spacing is predefined or configured by a signaling. As one subsidiary embodiment of the above embodiment, the reference subcarrier spacing being predefined means that the reference subcarrier spacing is fixed. As one subsidiary embodiment of the above embodiment, the reference subcarrier spacing being predefined means that the reference subcarrier spacing is related to a frequency range (FR). As one subsidiary embodiment of the above embodiment, the reference subcarrier spacing being predefined means that the reference subcarrier spacing is related to a band index. As one subsidiary embodiment of the above embodiment, the reference subcarrier spacing being predefined means that the reference subcarrier spacing is equal to a subcarrier spacing of an initial downlink BWP (Bandwidth Part). As one subsidiary embodiment of the above embodiment, the reference subcarrier spacing being predefined means that the reference subcarrier spacing is equal to a subcarrier spacing of an initial uplink BWP (Bandwidth Part).

As one embodiment, the technical feature of "whether at least one downlink symbol indicated by the first information block belongs to the first-type symbol depends on the second information block" comprises the following meaning: any downlink symbol indicated by the first information block that does not overlap with a symbol indicated by the second information block belongs to the first-type symbol.

As one embodiment, the technical feature of "whether at least one downlink symbol indicated by the first information block belongs to the first-type symbol depends on the second information block" comprises the following meaning: any downlink symbol indicated by the first information block that is other than a symbol indicated by the second information block belongs to the first-type symbol.

As one embodiment, the technical feature of "whether at least one downlink symbol indicated by the first information block belongs to the first-type symbol depends on the second information block" comprises the following meaning: the second information block is used for indicating at least one SBFD symbol, and any downlink symbol indicated by the first information block that does not overlap with any SBFD symbol indicated by the second information block belongs to the first-type symbol.

As one embodiment, the technical feature of "whether at least one downlink symbol indicated by the first information block belongs to the first-type symbol depends on the second information block" comprises the following meaning: whether at least one downlink symbol indicated by the first information block belongs to the first-type symbol is related to whether the second information block is provided.

As one embodiment, the technical feature of "whether at least one downlink symbol indicated by the first information block belongs to the first-type symbol depends on the second information block" comprises the following meaning: whether at least one downlink symbol indicated by the first information block belongs to the first-type symbol is related to a symbol indicated by the second information block.

As one embodiment, the technical feature of "whether at least one downlink symbol indicated by the first information block belongs to the first-type symbol depends on the second information block" comprises the following meaning: a target symbol is at least one downlink symbol indicated by the first information block; when the target symbol completely or partially overlaps with one symbol indicated by the second information block in the time domain, the target symbol belongs to a symbol other than the first-type symbol; otherwise, the target symbol belongs to the first-type symbol.

As one embodiment, the technical feature of "whether at least one downlink symbol indicated by the first information block belongs to the first-type symbol depends on the second information block" comprises the following meaning: the target symbol is at least one downlink symbol indicated by the first information block; when the second information block is provided and the target symbol completely or partially overlaps with one symbol indicated by the second information block in the time domain, the target symbol belongs to a symbol other than the first-type symbol; otherwise, the target symbol belongs to the first-type symbol.

As one embodiment, when the second information block is not provided, all downlink symbols indicated by the first information block belong to the first-type symbol.

As one embodiment, the technical feature of "the first PUCCH resource overlaps with one first-type symbol, and whether at least one downlink symbol indicated by the first information block belongs to the first-type symbol depends on the second information block" comprises the following meaning: the first PUCCH resource overlaps with one symbol that is indicated as a downlink symbol by the first information block and is other than a symbol indicated by the second information block.

As one embodiment, the technical feature of "the first PUCCH resource overlaps with one first-type symbol, and whether at least one downlink symbol indicated by the first information block belongs to the first-type symbol depends on the second information block" comprises the following meaning: one symbol overlapping with the first PUCCH resource is a symbol that is indicated as a downlink by the first information block and for which the second information block is not provided, or is indicated as a downlink by the first information block and is other than a symbol indicated by the first information block.

As one embodiment, the technical feature of "the first PUCCH resource overlaps with one first-type symbol, and whether at least one downlink symbol indicated by the first information block belongs to the first-type symbol depends on the second information block" comprises the following meaning: the first PUCCH resource overlaps with one symbol that is indicated as a downlink symbol by the first information block and is a symbol other than an SBFD symbol indicated by the second information block.

As one embodiment, the technical feature of "the first PUCCH resource overlaps with one first-type symbol, and whether at least one downlink symbol indicated by the first information block belongs to the first-type symbol depends on the second information block" comprises the following meaning: one symbol overlapping with the first PUCCH resource is a symbol that is indicated as a downlink by the first information block and for which the second information block is not provided, or is indicated as a downlink by the first information block and is other than an SBFD symbol indicated by the second information block.

As one embodiment, the technical feature of "the first PUCCH resource overlaps with one first-type symbol, and whether at least one downlink symbol indicated by the first information block belongs to the first-type symbol depends on the second information block" comprises the following meaning: the first PUCCH resource overlaps with one symbol that is indicated as a downlink symbol by the first information block and is not provided by the second information block.

As one embodiment, the technical feature of "the first PUCCH resource overlaps with one first-type symbol, and whether at least one downlink symbol indicated by the first information block belongs to the first-type symbol depends on the second information block" comprises the following meaning: one symbol overlapping with the first PUCCH resource is a symbol that is indicated as a downlink by the first information block and for which the second information block is not provided, or is indicated as a downlink by the first information block and is not provided by the second information block.

As one embodiment, the SPS HARQ delay value is a maximum number of time slots or sub-time slots by which a downlink SPS HARQ-ACK can be delayed.

As one embodiment, the SPS HARQ delay value is a maximum time interval length of a downlink SPS HARQ-ACK from a receiving time slot or receiving sub-time slot of a corresponding SPS PDSCH to a new delayed transmission time slot or sub-time slot of the downlink SPS HARQ-ACK.

As one embodiment, the SPS HARQ delay value is a threshold of a delayed time interval length for determining whether a downlink SPS HARQ-ACK may be transmitted in the delayed time slot or sub-time slot.

As one embodiment, the SPS HARQ delay value corresponding to the target HARQ bit set is an SPS HARQ delay value of an SPS PDSCH configuration corresponding to the target HARQ bit set.

As one embodiment, the SPS HARQ delay value corresponding to the target HARQ bit set is an SPS HARQ delay value of an SPS PDSCH configuration corresponding to an HARQ-ACK bit comprised in the target HARQ bit set.

As one embodiment, the SPS HARQ delay value corresponding to the target HARQ bit set is an SPS HARQ delay value of an SPS PDSCH configuration corresponding to any HARQ-ACK bit comprised in the target HARQ bit set.

As one embodiment, the SPS HARQ delay value corresponding to the target HARQ bit set is an SPS HARQ delay value in an SPS PDSCH configuration configured for an SPS PDSCH corresponding to any HARQ-ACK bit comprised in the target HARQ bit set.

As one embodiment, SPS HARQ delay values corresponding to the target HARQ bit set are all SPS HARQ delay values corresponding to the target HARQ bit set.

As one embodiment, the target HARQ bit set corresponds to only one SPS HARQ delay value.

As one embodiment, the target HARQ bit set corresponds to a plurality of SPS HARQ delay values.

As one embodiment, the target HARQ bit set corresponds to only one SPS PDSCH configuration.

As one embodiment, the target HARQ bit set corresponds to a plurality of SPS PDSCH configurations.

As one embodiment, an SPS PDSCH corresponding to one HARQ-ACK bit is an SPS PDSCH to which a TB, for which this HARQ-ACK bit is used for indicating whether decoding is correct, is mapped.

As one embodiment, an SPS PDSCH corresponding to one HARQ-ACK bit is an SPS PDSCH based on whether TBs carried are successfully decoded when this HARQ-ACK bit is generated.

As one embodiment, an SPS PDSCH configuration corresponding to one HARQ-ACK bit is an SPS PDSCH configuration used for configuring an SPS PDSCH corresponding to this HARQ-ACK bit.

As one embodiment, an SPS PDSCH configuration corresponding to one HARQ-ACK bit is an SPS PDSCH configuration adopted by an SPS PDSCH corresponding to this HARQ-ACK bit.

As one embodiment, any SPS HARQ delay value corresponding to the target HARQ bit set is an SPS HARQ delay value indicated by an SPS PDSCH configuration corresponding to at least one HARQ-ACK bit comprised in the target HARQ bit set.

As one embodiment, SPS HARQ delay values corresponding to the target HARQ bit set are equal to all SPS HARQ delay values indicated by all SPS PDSCH configurations corresponding to the target HARQ bit set.

As one embodiment, S1 HARQ-ACK bits comprised in the target HARQ bit set are respectively used for indicating whether TBs respectively carried by S1 SPS PDSCHs are correctly decoded, the S1 SPS PDSCHs are configured by C1 SPS PDSCH configurations, and SPS HARQ delay values corresponding to the target HARQ bit set are all SPS HARQ delay values indicated by the C1 SPS PDSCH configurations.

As one embodiment, S1 HARQ-ACK bits comprised in the target HARQ bit set are respectively generated based on whether TBs respectively carried by S1 SPS PDSCHs are correctly decoded, the S1 SPS PDSCHs are configured by C1 SPS PDSCH configurations, and SPS HARQ delay values corresponding to the target HARQ bit set are all SPS HARQ delay values indicated by the C1 SPS PDSCH configurations.

As one embodiment, the technical feature of "an SPS HARQ delay value corresponding to the target HARQ bit set is not less than a time interval length between the target time slot and a receiving time slot of a corresponding SPS PDSCH" comprises the following meaning: the SPS HARQ delay value corresponding to the target HARQ bit set is not less than a time interval length between the target time slot and a receiving time slot of an SPS PDSCH for the first HARQ bit set.

As one embodiment, the technical feature of "an SPS HARQ delay value corresponding to the target HARQ bit set is not less than a time interval length between the target time slot and a receiving time slot of a corresponding SPS PDSCH" comprises the following meaning: at least one SPS HARQ delay value corresponding to the target HARQ bit set is not less than a time interval length between the target time slot and a receiving time slot of one SPS PDSCH for the first HARQ bit set.

As one embodiment, the technical feature of "an SPS HARQ delay value corresponding to the target HARQ bit set is not less than a time interval length between the target time slot and a receiving time slot of a corresponding SPS PDSCH" comprises the following meaning: the SPS HARQ delay value corresponding to the target HARQ bit set that is indicated by at least one SPS PDSCH configuration providing an SPS HARQ delay value is not less than a time interval length between the target time slot and a receiving time slot of one SPS PDSCH for the first HARQ bit set.

As one embodiment, the technical feature of "an SPS HARQ delay value corresponding to the target HARQ bit set is not less than a time interval length between the target time slot and a receiving time slot of a corresponding SPS PDSCH" comprises the following meaning: the SPS HARQ delay value corresponding to the target HARQ bit set is greater than or equal to a time interval length between the target time slot and a receiving time slot of a corresponding SPS PDSCH.

As one embodiment, the technical feature of "an SPS HARQ delay value corresponding to the target HARQ bit set is not less than a time interval length between the target time slot and a receiving time slot of a corresponding SPS PDSCH" comprises the following meaning: an SPS HARQ delay value corresponding to one HARQ-ACK bit in the target HARQ bit set is greater than or equal to a time interval length between the target time slot and a receiving time slot of an SPS PDSCH corresponding to this HARQ-ACK bit.

As one embodiment, the technical feature of "an SPS HARQ delay value corresponding to the target HARQ bit set is not less than a time interval length between the target time slot and a receiving time slot of a corresponding SPS PDSCH" comprises the following meaning: an SPS HARQ delay value corresponding to any HARQ-ACK bit in the target HARQ bit set is greater than or equal to a time interval length between the target time slot and a receiving time slot of an SPS PDSCH corresponding to this HARQ-ACK bit.

As one embodiment, the technical feature of "an SPS HARQ delay value corresponding to the target HARQ bit set is not less than a time interval length between the target time slot and a receiving time slot of a corresponding SPS PDSCH" comprises the following meaning: an SPS HARQ delay value indicated by an SPS PDSCH configuration corresponding to one HARQ-ACK bit in the target HARQ bit set is greater than or equal to a time interval length between the target time slot and a receiving time slot of a corresponding SPS PDSCH.

As one embodiment, the technical feature of "an SPS HARQ delay value corresponding to the target HARQ bit set is not less than a time interval length between the target time slot and a receiving time slot of a corresponding SPS PDSCH" comprises the following meaning: an SPS HARQ delay value corresponding to one HARQ-ACK bit in the target HARQ bit set that is indicated by an SPS PDSCH configuration provided with an SPS HARQ delay value is greater than or equal to a time interval length between the target time slot and a receiving time slot of a corresponding SPS PDSCH.

As one embodiment, the technical feature of "an SPS HARQ delay value corresponding to the target HARQ bit set is not less than a time interval length between the target time slot and a receiving time slot of a corresponding SPS PDSCH" comprises the following meaning: the target HARQ bit set consists of bits in the first HARQ bit set for which a corresponding SPS HARQ delay value is greater than or equal to a time interval length between the target time slot and a receiving time slot of a corresponding SPS PDSCH.

As one embodiment, a receiving time slot of one SPS PDSCH is a time slot to which a resource occupied by this SPS PDSCH in the time domain belongs.

As one embodiment, a receiving time slot of one SPS PDSCH is a starting time slot in the time domain when this SPS PDSCH is received.

As one embodiment, a receiving time slot of one SPS PDSCH is a cutoff time slot in the time domain when this SPS PDSCH is received.

As one embodiment, a time interval length between the target time slot and a receiving time slot of a corresponding SPS PDSCH is a time interval length between a starting moment of the target time slot and a starting moment of the receiving time slot of the corresponding SPS PDSCH.

As one embodiment, a time interval length between the target time slot and a receiving time slot of a corresponding SPS PDSCH is a time interval length between a cutoff moment of the target time slot and a cutoff moment of the receiving time slot of the corresponding SPS PDSCH.

As one embodiment, a time interval length between the target time slot and a receiving time slot of a corresponding SPS PDSCH is a difference between the target time slot and the receiving time slot of the corresponding SPS PDSCH.

As one embodiment, a time interval length between the target time slot and a receiving time slot of a corresponding SPS PDSCH is the number of time slots or sub-time slots between the target time slot and the receiving time slot of the corresponding SPS PDSCH.

As one embodiment, a time interval length between the target time slot and a receiving time slot of a corresponding SPS PDSCH is the number of time slots or sub-time slots spaced between the target time slot and the receiving time slot of the corresponding SPS PDSCH, with a PUCCH transmission time slot on a primary cell serving as a reference.

As one embodiment, the first signal does not overlap with any downlink symbol other than the first-type symbol as indicated by the first information block.

As one embodiment, the first signal does not overlap with any SS/PBCH block symbol.

As one embodiment, the first signal does not overlap with any control resource set symbol associated with a type-0 common search space set.

As one embodiment, a first node determines the target time slot based on overlapping between the first PUCCH resource and at least one first-type symbol.

As one embodiment, at least one HARQ-ACK bit comprised in the target HARQ bit set is from the first HARQ bit set.

As one embodiment, at least one downlink symbol other than the first-type symbol as indicated by the first information block may be used for uplink transmission in one uplink full duplex subband.

As one embodiment, at least one downlink symbol other than the first-type symbol as indicated by the first information block may be used for uplink transmission in one uplink full duplex subband, and an information block other than the second information block is used for determining frequency-domain resources comprised in at least one uplink full duplex subband and time-domain resources supporting the uplink full duplex subband.

As one embodiment, at least one downlink symbol other than the first-type symbol as indicated by the first information block may be used for uplink transmission in one uplink full duplex subband, and the second information block is used for determining frequency-domain resources comprised in at least one uplink full duplex subband and time-domain resources supporting the uplink full duplex subband.

### Embodiment 2

Embodiment 2 illustrates a schematic diagram of one network architecture according to the present application, as shown in FIG. 2. FIG. 2 illustrates a diagram of a network architecture 200 of a 5G NR, LTE (Long-Term Evolution) and LTE-A (Long-Term Evolution Advanced) system. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, an NG-RAN (Next Generation Radio Access Network) 202, a 5GC (5G Core Network)/EPC (Evolved Packet Core) 210, an HSS (Home Subscriber Server)/UDM (Unified Data Management) 220, and an Internet service 230. The 5GS/EPS may be interconnected with other access networks, but these entities/interfaces are not shown for simplicity. As shown in the figure, the 5GS/EPS provides packet switching services, but those skilled in the art will readily understand that various concepts presented throughout the present application may be extended to networks that provide circuit switching services or other cellular networks. The NG-RAN comprises an NR/Evolved Node B (gNB/eNB) 203 and other gNBs (eNBs) 204. The gNB (eNB) 203 provides user and control plane protocol termination towards the UE201. The gNB (eNB) 203 may be connected to the other gNBs (eNBs) 204 via an Xn/X2 interface (e.g., backhaul). The gNB (eNB) 203 may also be referred to as a base station, a base transceiver station, a radio base station, a radio transceiving device, a transceiving device function, a basic service set (BSS), an extended service set (ESS), a TRP (Transmitter Receiver Point), or some other suitable terminologies. The gNB (eNB) 203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, a test device, a test instrumentation, a test tool, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB (eNB) 203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address assignment and other functions. The P-GW/UPF213 is connected to the Internet service 230. The Internet service 230 comprises an operator-corresponding Internet protocol service, which may specifically comprise the Internet, an intranet, an IMS (IP Multimedia Subsystem), and a packet switching streaming service.

As one embodiment, the UE201 corresponds to a first node device in the present application.

As one embodiment, the UE201 supports transmission in a flexible duplex mode.

As one embodiment, the gNB (eNB) 201 corresponds to a second node device in the present application.

As one embodiment, the gNB (eNB) 201 supports transmission in a flexible duplex mode.

### Embodiment 3

Embodiment 3 shows a schematic diagram of an embodiment of a wireless protocol architecture for one user plane and one control plane according to the present application, as shown in FIG. 3. FIG. 3 is a schematic diagram illustrating an embodiment of a radio protocol architecture for a user plane 350 and a control plane 300, and FIG. 3 shows the radio protocol architecture for the control plane 300 of a first node device (UE or a gNB) and a second node device (a gNB or UE) using three layers: a Layer 1, a Layer 2, and a Layer 3. The Layer 1 (L1 layer) is the lowest layer and implements various PHY (physical layer) signal processing functions. The L1 layer will be referred to as a PHY301 herein. A Layer 2 (L2 layer) 305 is above the PHY301 and is responsible for a link between the first node device and the second node device through the PHY301. The L2 layer 305 comprises an MAC (Medium Access Control) sublayer 302, an RLC (Radio Link Control) sublayer 303, and a PDCP (Packet Data Convergence Protocol) sublayer 304, these sublayers terminating at the second node device. The PDCP sublayer 304 provides multiplexing between different radio bearers and logical channels. The PDCP sublayer 304 also provides security by encrypting data packets, and provides handover support on the first node device between the second node devices. The RLC sublayer 303 provides segmentation and reassembling of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for assigning various radio resources (e.g., resource blocks) in one cell between the first node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using an RRC signaling between the second node device and the first node device. The radio protocol architecture for the user plane 350 comprises the Layer 1 (L1 layer) and the Layer 2 (L2 layer). The radio protocol architecture for the first node device and the second node device in the user plane 350 is substantially the same as that for the corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first node device may have several upper layers above the L2 layer 355, comprising a network layer (e.g., IP layer) terminating at the P-GW on the network side and an application layer terminating at the other end (e.g., remote UE and a server, etc.) of a connection.

As one embodiment, the wireless protocol architecture in FIG. 3 is applicable to the first node device in the present application.

As one embodiment, the wireless protocol architecture in FIG. 3 is applicable to the second node device in the present application.

As one embodiment, a first information block in the present application is generated at an RRC306, or an MAC302, or an MAC352, or the PHY301, or a PHY351.

As one embodiment, a second information block in the present application is generated at the RRC306, or the MAC302, or the MAC352, or the PHY301, or the PHY351.

As one embodiment, a first signal in the present application is generated at the RRC306, or the MAC302, or the MAC352, or the PHY301, or the PHY351.

As one embodiment, a third information block in the present application is generated at the RRC306, or the MAC302, or the MAC352, or the PHY301, or the PHY351.

### Embodiment 4

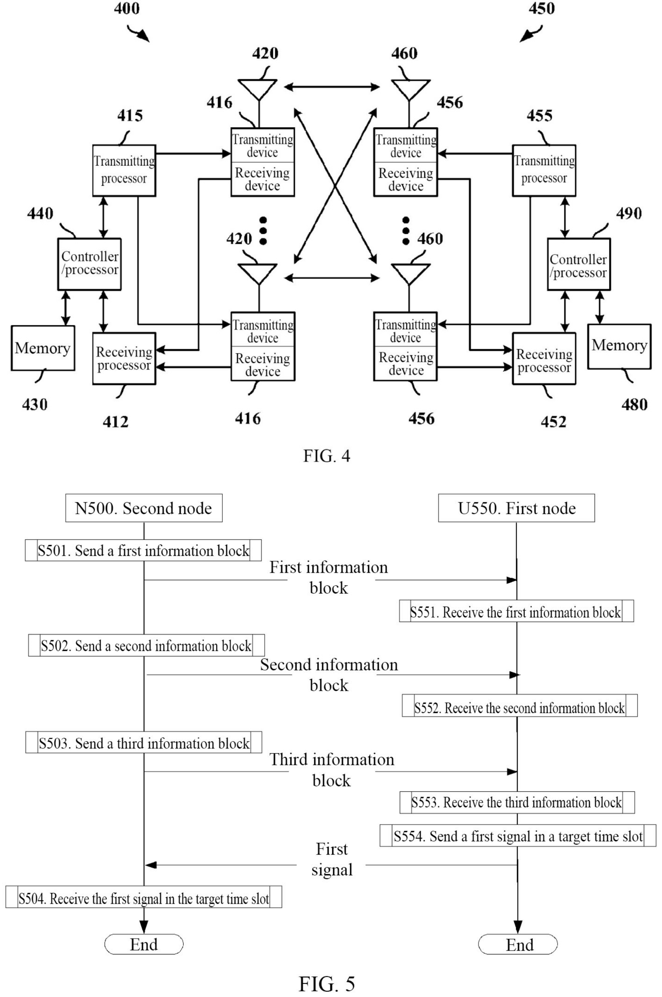

Embodiment 4 shows a schematic diagram of a first node device and a second node device according to one embodiment of the present application, as shown in FIG. 4.

The first node device (450) may comprise a controller/processor 490, a data source/buffer 480, a receiving processor 452, a transmitting device/receiving device 456, and a transmitting processor 455, and the transmitting device/receiving device 456 comprises an antenna 460.

The second node device (410) may comprise a controller/processor 440, a data source/buffer 430, a receiving processor 412, a transmitting device/receiving device 416, and a transmitting processor 415, and the transmitting device/receiving device 416 comprises an antenna 420.

In a DL (Downlink), upper-layer packets are provided to the controller/processor 440. The controller/processor 440 implements functions of an L2 layer and above. In the DL, the controller/processor 440 provides packet header compression, encryption, packet segmentation and reordering, multiplexing between logical and transport channels, and radio resource assignment to the first node device 450 based on various priority metrics. The controller/processor 440 is also responsible for HARQ operations, retransmission of lost packets, and a high-layer signaling to the first node device 450. High-layer information carried by a first information block, a second information block and a third information block in the present application is generated at the controller/processor 440. The transmitting processor 415 implements various signal processing functions for an L1 layer (i.e., a physical layer), comprising coding, interleaving, scrambling, modulation, power control/assignment, precoding, physical layer control signaling generation, etc., for example, the generation of a physical layer signal carrying the first information block in the present application, a physical layer signal carrying the second information block, and a physical layer signal carrying the third information block is completed at the transmitting processor 415. Generated modulation symbols are divided into parallel streams, and each stream is mapped to a corresponding multi-carrier sub-carrier and/or multi-carrier symbol, which is then mapped to the antenna 420 by the transmitting processor 415 via the transmitting device 416 to be transmitted in the form of a radio frequency signal. At a receiving end, each receiving device 456 receives the radio frequency signal through its corresponding antenna 460, and each receiving device 456 recovers baseband information modulated onto a radio frequency carrier and provides the baseband information to the receiving processor 452. The receiving processor 452 implements various signal receiving processing functions of the L1 layer. The signal receiving processing functions comprise receiving the physical layer signal carrying the first information block in the present application, the physical layer signal carrying the second information block in the present application, and the physical layer signal carrying the third information block in the present application, demodulating the multi-carrier symbols in the multi-carrier symbol stream based on various modulation solutions (e.g., binary phase shift keying (BPSK), and quadrature phase shift keying (QPSK)), and then descrambling, decoding and deinterleaving to recover data or control transmitted by the second node device 410 on the physical channel, and then providing data and control signals to the controller/processor 490. The controller/processor 490 is responsible for the L2 layer and above, and the controller/processor 490 interprets the high-layer information, comprising interpreting the high-layer information carried by the first information block, the second information block and the third information block. The controller/processor may be associated with a memory 480 storing a program code and data. The memory 480 may be referred to as a computer-readable medium.

In uplink (UL) transmission, similar to downlink transmission, high-layer information comprising high-layer information carried by a first signal in the present application (when the first signal carries the high-layer information) is generated at the controller/processor 490 and then is implemented by the transmitting processor 455 for various signal transmission processing functions for the L1 layer (i.e., a physical layer), and a physical layer signal of the first signal is mapped to the antenna 460 by the transmitting processor 455 via the transmitting device 456 to be transmitted in the form of a radio frequency signal. The receiving device 416 receives the radio frequency signal through its corresponding antenna 420, and each receiving device 416 recovers baseband information modulated on a radio frequency carrier and provides the baseband information to the receiving processor 412. The receiving processor 412 implements various signal receiving processing functions for the L1 layer (i.e., the physical layer), comprising receiving and processing a physical layer signal carrying the first signal in the present application, and then providing data and/or control signals to the controller/processor 440. The functions of the L2 layer implemented at the controller/processor 440 comprise interpreting high-layer information, such as high-layer information carried by the first signal in the present application (when the first signal carries the high-layer information). The controller/processor may be associated with the buffer 430 storing a program code and data. The buffer 430 may be a computer-readable medium.

As one embodiment, the first node device 450 apparatus comprises: at least one processor and at least one memory, the at least one memory comprising a computer program code, wherein the at least one memory and the computer program code are configured to be used together with the at least one processor, and the first node device 450 apparatus at least: receives the first information block and receives the second information block, the first information block being used for indicating at least one downlink symbol; and sends the first signal in a target time slot, the first signal being used for carrying at least one HARQ-ACK bit comprised in a target HARQ bit set, wherein the at least one HARQ-ACK bit comprised in the target HARQ bit set belongs to a first HARQ bit set, and the first HARQ bit set comprises at least one HARQ-ACK bit for an SPS PDSCH; a first PUCCH resource is a PUCCH resource determined for the first HARQ bit set; the first PUCCH resource overlaps with one first-type symbol, and whether the at least one downlink symbol indicated by the first information block belongs to the first-type symbol depends on the second information block; and an SPS HARQ delay value corresponding to the target HARQ bit set is not less than a time interval length between the target time slot and a receiving time slot of a corresponding SPS PDSCH.

As one embodiment, the first node device 450 apparatus comprises: a memory storing a computer-readable instruction program, the computer-readable instruction program generating actions when executed by at least one processor, and the actions comprising: receiving the first information block and receiving the second information block, the first information block being used for indicating at least one downlink symbol; and sending the first signal in the target time slot, the first signal being used for carrying at least one HARQ-ACK bit comprised in the target HARQ bit set, wherein the at least one HARQ-ACK bit comprised in the target HARQ bit set belongs to the first HARQ bit set, and the first HARQ bit set comprises at least one HARQ-ACK bit for an SPS PDSCH; the first PUCCH resource is a PUCCH resource determined for the first HARQ bit set; the first PUCCH resource overlaps with one first-type symbol, and whether the at least one downlink symbol indicated by the first information block belongs to the first-type symbol depends on the second information block; and the SPS HARQ delay value corresponding to the target HARQ bit set is not less than the time interval length between the target time slot and the receiving time slot of the corresponding SPS PDSCH.

As one embodiment, the second node device 410 apparatus comprises: at least one processor and at least one memory, the at least one memory comprising a computer program code, wherein the at least one memory and the computer program code are configured to be used together with the at least one processor. The second node device 410 apparatus at least: sends the first information block and sends the second information block, the first information block being used for indicating at least one downlink symbol; and receives the first signal in the target time slot, the first signal being used for carrying at least one HARQ-ACK bit comprised in the target HARQ bit set, wherein the at least one HARQ-ACK bit comprised in the target HARQ bit set belongs to the first HARQ bit set, and the first HARQ bit set comprises at least one HARQ-ACK bit for an SPS PDSCH; the first PUCCH resource is a PUCCH resource determined for the first HARQ bit set; the first PUCCH resource overlaps with one first-type symbol, and whether the at least one downlink symbol indicated by the first information block belongs to the first-type symbol depends on the second information block; and the SPS HARQ delay value corresponding to the target HARQ bit set is not less than the time interval length between the target time slot and the receiving time slot of the corresponding SPS PDSCH.

As one embodiment, the second node device 410 comprises: a memory storing a computer-readable instruction program, the computer-readable instruction program generating actions when executed by at least one processor, and the actions comprising: sending the first information block and sending the second information block, the first information block being used for indicating at least one downlink symbol; and receiving the first signal in the target time slot, the first signal being used for carrying at least one HARQ-ACK bit comprised in the target HARQ bit set, wherein the at least one HARQ-ACK bit comprised in the target HARQ bit set belongs to the first HARQ bit set, and the first HARQ bit set comprises at least one HARQ-ACK bit for an SPS PDSCH; the first PUCCH resource is a PUCCH resource determined for the first HARQ bit set; the first PUCCH resource overlaps with one first-type symbol, and whether the at least one downlink symbol indicated by the first information block belongs to the first-type symbol depends on the second information block; and the SPS HARQ delay value corresponding to the target HARQ bit set is not less than the time interval length between the target time slot and the receiving time slot of the corresponding SPS PDSCH.

As one embodiment, the first node device 450 is one piece of user equipment (UE).

As one embodiment, the first node device 450 is one piece of user equipment supporting transmission in a flexible duplex mode.

As one embodiment, the second node device 410 is one base station device (gNB/eNB).

As one embodiment, the second node device 410 is one base station device supporting transmission in a flexible duplex mode.

As one embodiment, the receiving device 456 (comprising the antenna 460), the receiving processor 452, and the controller/processor 490 are used for receiving the first information block in the present application.

As one embodiment, the receiving device 456 (comprising the antenna 460), the receiving processor 452, and the controller/processor 490 are used for receiving the second information block in the present application.

As one embodiment, the transmitting device 456 (comprising the antenna 460), the transmitting processor 455, and the controller/processor 490 are used for sending the first signal in the present application.

As one embodiment, the receiving device 456 (comprising the antenna 460), the receiving processor 452, and the controller/processor 490 are used for receiving the third information block in the present application.

As one embodiment, the transmitting device 416 (comprising the antenna 420), the transmitting processor 415, and the controller/processor 440 are used for sending the first information block in the present application.

As one embodiment, the transmitting device 416 (comprising the antenna 420), the transmitting processor 415, and the controller/processor 440 are used for sending the second information block in the present application.

As one embodiment, the receiving device 416 (comprising the antenna 420), the receiving processor 412, and the controller/processor 440 are used for receiving the first signal in the present application.

As one embodiment, the transmitting device 416 (comprising the antenna 420), the transmitting processor 415, and the controller/processor 440 are used for sending the third information block in the present application.

### Embodiment 5

Embodiment 5 illustrates a flowchart of wireless signal transmission according to one embodiment of the present application, as shown in FIG. 5. In FIG. 5 , a second node device N500 is a maintenance base station of a serving cell of a first node device U550. It is particularly noted that the order in this example does not limit the signal transmission order and implementation order in the present application.

For **the second node device N500,** a first information block is sent in step S501, a second information block is sent in step S502, a third information block is sent in step S503, and a first signal is received in a target time slot in step S504.

For **the first node device U550,** the first information block is received in step S551, the second information block is received in step S552, the third information block is received in step S553, and the first signal is sent in the target time slot in step S554.

In Embodiment 5, the first information block is used for indicating at least one downlink symbol; the first signal is used for carrying at least one HARQ-ACK bit comprised in a target HARQ bit set; the at least one HARQ-ACK bit comprised in the target HARQ bit set belongs to a first HARQ bit set, and the first HARQ bit set comprises at least one HARQ-ACK bit for an SPS PDSCH; a first PUCCH resource is a PUCCH resource determined for the first HARQ bit set; the first PUCCH resource overlaps with one first-type symbol, and whether the at least one downlink symbol indicated by the first information block belongs to the first-type symbol depends on the second information block; an SPS HARQ delay value corresponding to the target HARQ bit set is not less than a time interval length between the target time slot and a receiving time slot of a corresponding SPS PDSCH; and the third information block is used for determining an SPS HARQ delay value of at least one SPS PDSCH configuration, and the SPS HARQ delay value corresponding to the target HARQ bit set is equal to an SPS HARQ delay value of an SPS PDSCH configuration corresponding to the target HARQ bit set.

As one embodiment, the third information block is before the first information block.

As one embodiment, the third information block is after the first information block.

As one embodiment, the third information block is before the second information block.

As one embodiment, the third information block is after the second information block.

As one embodiment, the third information block is different from the second information block.

As one embodiment, the third information block and the second information block are transmitted through two different physical channels.

As one embodiment, the third information block and the second information block belong to fields of two parts in a same IE (Information Element) respectively.

As one embodiment, the third information block and the second information block belong to two different IEs respectively.

As one embodiment, a physical channel carrying the third information block and a physical channel carrying the second information block occupy a same time-frequency resource.

As one embodiment, the third information block comprises higher-layer information or a higher-layer parameter configuration.

As one embodiment, the third information block comprises one or more IEs comprised in one RRC (Radio Resource Control) layer signaling, or the third information block comprises one or more fields comprised in one RRC layer signaling.

As one embodiment, the third information block comprises part of or all fields comprised in one SIB (System Information Block).

As one embodiment, the third information block is UE specific or UE dedicated.

As one embodiment, the third information block is per bandwidth part.

As one embodiment, the third information block is configured per SPS.

As one embodiment, the third information block comprises physical layer control information or a physical layer control parameter.

As one embodiment, the third information block comprises part of or all fields in one DCI (Downlink Control Information) format.

As one embodiment, the third information block is transmitted through a PDCCH (Physical Downlink Control Channel).

As one embodiment, the third information block comprises part of or all fields in IE "SPS-Config".

As one embodiment, the third information block comprises a field or parameter "sps-HARQ-Deferral".

As one embodiment, the third information block comprises part of or all fields in IE "BWP-DownlinkDedicated".

As one embodiment, the third information block comprises part of or all fields in IE "BWP-Downlink".

As one embodiment, the third information block comprises part of or all fields in IE "SCellConfig".

As one embodiment, the third information block comprises part of or all fields in IE "CellGroupConfig".

As one embodiment, the third information block comprises part of or all fields in IE "ServingCellConfig".

### Embodiment 6

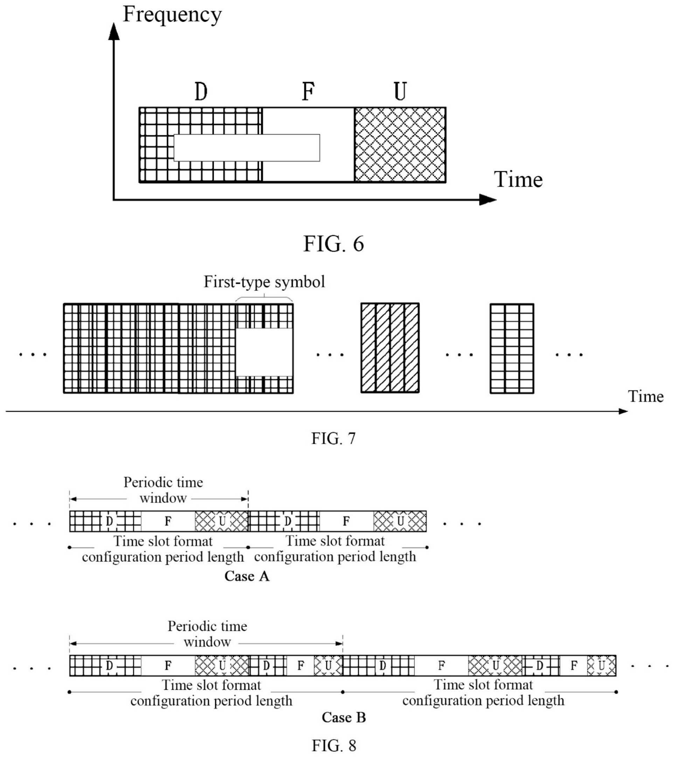

Embodiment 6 illustrates a schematic diagram of a first subband according to one embodiment of the present application, as shown in FIG. 6. In FIG. 6, a horizontal axis represents time, a vertical axis represents a frequency, a crosshatch-filled area represents an area indicated as a downlink symbol (D) by a first information block, a crisscross-filled area represents an area indicated as an uplink symbol (U) by the first information block, an unfilled area is a flexible symbol (F) area, and a gray-filled area represents the first subband in the frequency.

In Embodiment 6, a second information block in the present application is used for determining the first subband, and the first subband comprises at least one resource block; and at least one downlink symbol indicated by the first information block in the present application is used for uplink transmission in the first subband.

As one embodiment, the first subband is configured through the second information block, thereby supporting configuration of subbands per subcarrier spacing and configuration of time-domain symbols per subband, which increases flexibility of an SBFD configuration.

As one embodiment, the first subband is one full duplex subband.

As one embodiment, the first subband is a subband that can be used for uplink transmission in downlink symbols or flexible symbols.

As one embodiment, the first subband comprises a guard frequency-domain resource.

As one embodiment, the first subband does not comprise a guard frequency-domain resource.

As one embodiment, the first subband comprises consecutive frequency-domain resources.

As one embodiment, the first subband comprises discrete frequency-domain resources.

As one embodiment, one uplink BWP comprises all or part of frequency-domain resources in the first subband.

As one embodiment, one uplink active BWP comprises all or part of frequency-domain resources in the first subband.

As one embodiment, there are overlapping frequency-domain resources between the first subband and one uplink BWP.

As one embodiment, there are no overlapping frequency-domain resources between the first subband and one uplink BWP.

As one embodiment, boundaries of RBs (Resource Blocks) comprised in the first subband are aligned with boundaries of RBs in an uplink BWP.

As one embodiment, boundaries of RBs comprised in the first subband are aligned with boundaries of RBs in a downlink BWP.

As one embodiment, the technical feature of "a second information block is used for determining the first subband" comprises the following meaning: all or part comprised in the second information block are or is used for explicitly or implicitly indicating the first subband.

As one embodiment, the technical feature of "a second information block is used for determining the first subband" comprises the following meaning: the second information block is used for determining the first subband by a first node device in the present application.

As one embodiment, the technical feature of "a second information block is used for determining the first subband" comprises the following meaning: all or part comprised in the second information block are or is used for explicitly or implicitly indicating starting RBs (or RBs with lowest indexes) of the first subband.

As one embodiment, the technical feature of "a second information block is used for determining the first subband" comprises the following meaning: all or part comprised in the second information block are or is used for explicitly or implicitly indicating the number of RBs comprised in the first subband.

As one embodiment, the technical feature of "a second information block is used for determining the first subband" comprises the following meaning: all or part comprised in the second information block are or is used for explicitly or implicitly indicating an RIV (resource indicator value) corresponding to the first subband.

As one embodiment, the technical feature of "a second information block is used for determining the first subband" comprises the following meaning: all or part comprised in the second information block are or is used for explicitly or implicitly indicating an RIV corresponding to the first subband, and a starting RB and the number of comprised consecutive RBs of the first subband are used for generating corresponding RIVs.

As one embodiment, the technical feature of "a second information block is used for determining the first subband" comprises the following meaning: all or part comprised in the second information block are or is used for explicitly or implicitly indicating an SLIV (start and length indicator value) corresponding to the first subband.

As one embodiment, the technical feature of "a second information block is used for determining the first subband" comprises the following meaning: all or part comprised in the second information block are or is used for explicitly or implicitly indicating an SLIV corresponding to the first subband, and a starting RB and the number of comprised consecutive RBs of the first subband are used for generating corresponding SLIVs.

As one embodiment, the technical feature of "a second information block is used for determining the first subband" comprises the following meaning: the second information block is used for determining at least one CRB (common resource block) comprised in the first subband.

As one embodiment, the technical feature of "a second information block is used for determining the first subband" comprises the following meaning: the second information block is used for determining the number of CRBs spaced between CRBs with lowest indexes comprised in the first subband and a frequency point A, as well as the number of consecutive CRBs comprised in the first subband.

As one embodiment, the technical feature of "a second information block is used for determining the first subband" comprises the following meaning: the second information block is used for determining the number of CRBs for a reference subcarrier spacing that are spaced between CRBs with lowest indexes for the reference subcarrier spacing that are comprised in the first subband and a frequency point A, as well as the number of consecutive CRBs for the reference subcarrier spacing that are comprised in the first subband. As one subsidiary embodiment of the above embodiment, the reference subcarrier spacing is equal to a subcarrier spacing of one carrier. As one subsidiary embodiment of the above embodiment, the reference subcarrier spacing is equal to a subcarrier spacing in a resource grid of one uplink. As one subsidiary embodiment of the above embodiment, the reference subcarrier spacing is equal to a subcarrier spacing in a resource grid of one downlink. As one subsidiary embodiment of the above embodiment, the reference subcarrier spacing is related to a frequency range (FR). As one subsidiary embodiment of the above embodiment, the reference subcarrier spacing is predefined or configured. As one subsidiary embodiment of the above embodiment, the reference subcarrier spacing is a maximum value among subcarrier spacings respectively for a plurality of configured uplink resource grids. As one subsidiary embodiment of the above embodiment, the reference subcarrier spacing is a maximum value among subcarrier spacings respectively for a plurality of configured downlink resource grids. As one subsidiary embodiment of the above embodiment, the reference subcarrier spacing is a maximum value among subcarrier spacings respectively for all configured resource grids. As one subsidiary embodiment of the above embodiment, the reference subcarrier spacing is a minimum value among subcarrier spacings respectively for a plurality of configured uplink resource grids. As one subsidiary embodiment of the above embodiment, the reference subcarrier spacing is a minimum value among subcarrier spacings respectively for a plurality of configured downlink resource grids. As one subsidiary embodiment of the above embodiment, the reference subcarrier spacing is a minimum value among subcarrier spacings respectively for all configured resource grids.

As one embodiment, the technical feature of "a second information block is used for determining the first subband" comprises the following meaning: the second information block is used for respectively determining M1 subbands from M1 resource grids, M1 is a positive integer greater than 1, and the first subband is one of the M1 subbands. As one subsidiary embodiment of the above embodiment, the M1 resource grids are respectively for M1 subcarrier spacings, and the first subband is a subband among M1 subbands corresponding to subcarriers adopted by an uplink active BWP. As one subsidiary embodiment of the above embodiment, the M1 resource grids are M1 uplink resource grids. As one subsidiary embodiment of the above embodiment, the M1 resource grids are M1 downlink resource grids. As one subsidiary embodiment of the above embodiment, the M1 resource grids comprise both uplink resource grids and downlink resource grids. As one subsidiary embodiment of the above embodiment, the M1 resource grids are configured.

As one embodiment, the technical feature of "at least one downlink symbol indicated by the first information block is used for uplink transmission in the first subband" comprises the following meaning: at least one downlink symbol indicated by the first information block can (or may or is allowed to) be used for uplink transmission in the first subband.

As one embodiment, the technical feature of "at least one downlink symbol indicated by the first information block is used for uplink transmission in the first subband" comprises the following meaning: at least one downlink symbol indicated by the first information block is actually used for uplink transmission in the first subband.

As one embodiment, the technical feature of "at least one downlink symbol indicated by the first information block is used for uplink transmission in the first subband" comprises the following meaning: at least one downlink symbol indicated by the first information block is not used for actual uplink transmission in the first subband.

As one embodiment, the technical feature of "at least one downlink symbol indicated by the first information block is used for uplink transmission in the first subband" comprises the following meaning: at least one downlink symbol indicated by the first information block can be scheduled or configured for uplink transmission in the first subband.

As one embodiment, the technical feature of "at least one downlink symbol indicated by the first information block is used for uplink transmission in the first subband" comprises the following meaning: at least one downlink symbol indicated by the first information block may be used for uplink transmission in overlapping frequency-domain resources between the first subband and an uplink active BWP.

As one embodiment, the technical feature of "at least one downlink symbol indicated by the first information block is used for uplink transmission in the first subband" comprises the following meaning: at least one downlink symbol other than a first-type symbol as indicated by the first information block is used for uplink transmission in the first subband.

As one embodiment, the technical feature of "at least one downlink symbol indicated by the first information block is used for uplink transmission in the first subband" comprises the following meaning: at least one downlink symbol indicated by the first information block that overlaps with a symbol indicated (or provided) by the second information block is used for uplink transmission in the first subband.

As one embodiment, the technical feature of "at least one downlink symbol indicated by the first information block is used for uplink transmission in the first subband" comprises the following meaning: at least one downlink symbol indicated by the first information block that overlaps with a symbol indicated (or provided) by the second information block is used for uplink transmission in overlapping frequency-domain resources between the first subband and an uplink-active BWP.

### Embodiment 7

Embodiment 7 illustrates a schematic diagram of a first signal according to one embodiment of the present application, as shown in FIG. 7. In FIG. 7, a horizontal axis represents time, each crosshatch-filled rectangle represents one downlink symbol indicated by a first information block, each diagonal-line-filled rectangle represents one SS/PBCH block symbol, each horizontal-line-filled rectangle represents one control resource set symbol associated with a type-0 common search space set, and a gray-filled rectangle represents the first signal.

In Embodiment 7, the first signal in the present application does not overlap with any downlink symbol other than a first-type symbol in the present application as indicated by the first information block in the present application, the first signal does not overlap with any SS/PBCH block symbol, and the first signal does not overlap with any control resource set symbol associated with the type-0 common search space set.

As one embodiment, by requiring that the first signal does not overlap with any downlink symbol other than the first-type symbol as indicated by the first information block, sending a delayed SPS HARQ-ACK in an SBFD symbol is supported, which increases the probability of sending the delayed SPS HARQ-ACK.

As one embodiment, when the first signal is used for carrying at least one HARQ-ACK bit comprised in a target HARQ bit set, a procedure of determining a time slot for sending a delayed HARQ-ACK is stopped.

As one embodiment, the first signal carrying at least one HARQ-ACK bit comprised in the target HARQ bit set is used for determining that a procedure of determining a time slot for sending a delayed HARQ-ACK is stopped.

As one embodiment, at least one HARQ-ACK bit comprised in the target HARQ bit set being multiplexed into the first signal is used for determining that a procedure of determining a time slot for sending a delayed HARQ-ACK is stopped.

As one embodiment, the first signal uses a PUCCH resource for an SPS configuration.

As one embodiment, the first signal uses resources provided by "SPS-PUCCH-AN-List".

As one embodiment, the first signal uses resources provided by "n1PUCCH-AN".

As one embodiment, the first signal is not dropped due to overlapping with a higher-priority PUSCH or PUCCH.

As one embodiment, the technical feature of "the first signal does not overlap with any downlink symbol other than the first-type symbol as indicated by the first information block" comprises the following meaning: the first signal does not overlap with any downlink symbol indicated by the first information block but not provided (or indicated) by a second information block.

As one embodiment, the technical feature of "the first signal does not overlap with any downlink symbol other than the first-type symbol as indicated by the first information block" comprises the following meaning: the first signal does not overlap with any non-SBFD downlink symbol indicated by the first information block.

As one embodiment, the technical feature of "the first signal does not overlap with any downlink symbol other than the first-type symbol as indicated by the first information block" comprises the following meaning: the first signal does not overlap with any downlink symbol other than an SBFD symbol as indicated by the first information block.

As one embodiment, the technical feature of "the first signal does not overlap with any downlink symbol other than the first-type symbol as indicated by the first information block" comprises the following meaning: a time-domain resource occupied (or mapped) by the first signal does not overlap with any downlink symbol other than the first-type symbol as indicated by the first information block.

As one embodiment, the technical feature of "the first signal does not overlap with any downlink symbol other than the first-type symbol as indicated by the first information block" comprises the following meaning: a time-domain resource occupied (or mapped) by the first signal is orthogonal to any downlink symbol other than the first-type symbol as indicated by the first information block.

As one embodiment, the technical feature of "the first signal does not overlap with any downlink symbol other than the first-type symbol as indicated by the first information block" comprises the following meaning: there does not exist overlapping time-domain resources in the time domain between the first signal and any downlink symbol other than the first-type symbol as indicated by the first information block.

As one embodiment, the technical feature of "the first signal does not overlap with any downlink symbol other than the first-type symbol as indicated by the first information block" comprises the following meaning: a time-domain resource occupied (or mapped) by the first signal is orthogonal to any downlink symbol indicated by the first information block but not provided (or indicated) by the second information block.

As one embodiment, the technical feature of "the first signal does not overlap with any downlink symbol other than the first-type symbol as indicated by the first information block" comprises the following meaning: the first signal does not overlap with any downlink symbol indicated by the first information block that is other than the first-type symbol.

As one embodiment, the technical feature of "the first signal does not overlap with any SS/PBCH block symbol" comprises the following meaning: the first signal does not overlap with any symbol occupied (or mapped) by an SS/PBCH block in the time domain.

As one embodiment, the technical feature of "the first signal does not overlap with any SS/PBCH block symbol" comprises the following meaning: a time-domain resource occupied (or mapped) by the first signal is orthogonal to any symbol occupied (or mapped) by an SS/PBCH block in the time domain.

As one embodiment, the technical feature of "the first signal does not overlap with any SS/PBCH block symbol" comprises the following meaning: a time-domain resource occupied (or mapped) by the first signal is orthogonal to any symbol configured or indicated for an SS/PBCH block.

As one embodiment, the technical feature of "the first signal does not overlap with any SS/PBCH block symbol" comprises the following meaning: the first signal is orthogonal to any symbol of an SS/PBCH block indicated by "ssb-PositionsInBurst".

As one embodiment, the technical feature of "the first signal does not overlap with any control resource set symbol associated with the type-0 common search space set" comprises the following meaning: a time-domain resource occupied (or mapped) by the first signal is orthogonal to any control resource set (CORESET) symbol associated with the type-0 common search space set.

As one embodiment, the technical feature of "the first signal does not overlap with any control resource set symbol associated with the type-0 common search space set" comprises the following meaning: a time-domain resource occupied (or mapped) by the first signal does not overlap with any symbol occupied in the time domain by a control resource set associated with the type-0 common search space set.

As one embodiment, the technical feature of "the first signal does not overlap with any control resource set symbol associated with the type-0 common search space set" comprises the following meaning: a time-domain resource occupied (or mapped) by the first signal does not overlap with any symbol occupied in the time domain by a control resource set configured for the type-0 common search space set.

As one embodiment, the technical feature of "the first signal does not overlap with any control resource set symbol associated with the type-0 common search space set" comprises the following meaning: a time-domain resource occupied (or mapped) by the first signal is orthogonal to a time-domain resource occupied (or mapped) by a control resource set associated with the type-0 common search space set.

As one embodiment, the technical feature of "the first signal does not overlap with any control resource set symbol associated with the type-0 common search space set" comprises the following meaning: the first signal does not overlap with any symbol belonging to a control resource set #0.

As one embodiment, the technical feature of "the first signal does not overlap with any control resource set symbol associated with the type-0 common search space set" comprises the following meaning: the first signal does not overlap with any symbol of a control resource set associated with the type-0 common search space set.

### Embodiment 8

Embodiment 8 illustrates a schematic diagram of a periodic time window according to one embodiment of the present application, as shown in FIG. 8. In FIG. 8, in Cases A and B, each crosshatch-filled rectangle represents at least one downlink (D) symbol indicated by a first information block, each crisscross-filled rectangle represents at least one uplink (U) symbol indicated by the first information block, and each unfilled rectangle represents at least one flexible (F) time-domain symbol; in the Case A, only one distribution pattern of a time slot format is comprised in one periodic time window; and in the Case B, two distribution patterns of a time slot format are comprised in one periodic time window.

In Embodiment 8, a second information block in the present application is used for indicating at least one symbol from a periodic time window, the periodic time window comprises a plurality of consecutive symbols, and a time length of the periodic time window is related to a time slot format configuration period length; and a downlink symbol indicated by the first information block in the present application that does not overlap with a symbol indicated by the second information block belongs to a first-type symbol in the present application.

As one embodiment, the time length of the periodic time window being related to the time slot format configuration period length reduces configuration signaling overhead while ensuring configuration flexibility.

As one embodiment, the first information block is used for determining the time slot format configuration period length.

As one embodiment, a signaling other than the first information block is used for determining the time slot format configuration period length.

As one embodiment, the second information block is used for determining the time slot format configuration period length.

As one embodiment, a signaling other than the second information block is used for determining the time slot format configuration period length.

As one embodiment, the time slot format configuration period length is a period length of a TDD uplink-downlink configuration.

As one embodiment, the time slot format configuration period length is a time slot configuration period length.

As one embodiment, the time slot format configuration period length is a DL-UL-Transmission Periodicity.

As one embodiment, the time slot format configuration period length is a period length at which a pattern configuring a time slot format is periodically applied.

As one embodiment, the time slot format configuration period length is equal to a time slot configuration period length provided by a pattern 1.

As one embodiment, the time slot format configuration period length is equal to a time slot configuration period length provided by a pattern 2.

As one embodiment, the time slot format configuration period length is equal to the sum of a time slot configuration period length provided by the pattern 1 and a time slot configuration period length provided by the pattern 2.

As one embodiment, the time slot format configuration period length is equal to one DL-UL-Transmission Periodicity.

As one embodiment, the time slot format configuration period length is equal to the sum of two independent DL-UL-Transmission Periodicities.

As one embodiment, the second information block is used for determining the periodic time window.

As one embodiment, the periodic time window is one time slot configuration period.

As one embodiment, the periodic time window is aligned with one time slot configuration period.

As one embodiment, the periodic time window comprises a plurality of consecutive time slot configuration periods.

As one embodiment, the second information block is used for determining the number of time slot configuration periods comprised in the periodic time window.

As one embodiment, the second information block is used for determining a starting position of the periodic time window.

As one embodiment, the second information block is used for determining a time length of the periodic time window.

As one embodiment, the periodic time window is any time window among time windows that appear periodically.

As one embodiment, the periodic time window is one of time windows that appear periodically.

As one embodiment, a starting position of the periodic time window is predefined or is configurable.

As one embodiment, a unit of a time length of the periodic time window is in milliseconds.

As one embodiment, a time length of the periodic time window is represented by the number of time slots or the number of symbols.

As one embodiment, a time length of the periodic time window is represented by the number of time slots or the number of symbols corresponding to one reference subcarrier spacing. As one subsidiary embodiment of the above embodiment, the first information block is used for determining the reference subcarrier spacing. As one subsidiary embodiment of the above embodiment, the second information block is used for determining the reference subcarrier spacing. As one subsidiary embodiment of the above embodiment, the reference subcarrier spacing is equal to a subcarrier spacing of an RB comprised in a first subband in the present application. As one subsidiary embodiment of the above embodiment, the reference subcarrier spacing is predefined or configurable. As one subsidiary embodiment of the above embodiment, the reference subcarrier spacing is equal to a subcarrier spacing adopted by a time slot format configuration.

As one embodiment, the technical feature of "a second information block is used for indicating at least one symbol from a periodic time window" comprises the following meaning: all or part comprised in the second information block are or is used for explicitly or implicitly indicating at least one symbol from the periodic time window.

As one embodiment, the technical feature of "a second information block is used for indicating at least one symbol from a periodic time window" comprises the following meaning: all or part comprised in the second information block are or is used for explicitly or implicitly indicating at least one symbol for one subband.

As one embodiment, the technical feature of "a second information block is used for indicating at least one symbol from a periodic time window" comprises the following meaning: all or part comprised in the second information block are or is used for explicitly or implicitly indicating at least one full duplex symbol.

As one embodiment, the technical feature of "a second information block is used for indicating at least one symbol from a periodic time window" comprises the following meaning: all or part comprised in the second information block are or is used for explicitly or implicitly indicating, from the periodic time window, that at least one symbol may be used for full duplex (or may be used for both uplink and downlink) transmission.

As one embodiment, the technical feature of "a second information block is used for indicating at least one symbol from a periodic time window" comprises the following meaning: all or part comprised in the second information block are or is used for explicitly or implicitly indicating, from the periodic time window, that at least one symbol is an SBFD symbol.

As one embodiment, the technical feature of "a second information block is used for indicating at least one symbol from a periodic time window" comprises the following meaning: all or part comprised in the second information block are or is used for explicitly or implicitly indicating, from the periodic time window, that at least one symbol is a symbol for the first subband in the present application.

As one embodiment, the technical feature of "a second information block is used for indicating at least one symbol from a periodic time window" comprises the following meaning: the second information block is used for indicating, from the periodic time window, whether at least one symbol configured as a downlink symbol or a flexible symbol by the first information block is used for full duplex (or may be used for both uplink and downlink) transmission.

As one embodiment, the technical feature of "a second information block is used for indicating at least one symbol from a periodic time window" comprises the following meaning: the second information block is used for indicating, from the periodic time window, whether at least one symbol configured as a downlink symbol or a flexible symbol by the first information block is for the first subband in the present application.

As one embodiment, the technical feature of "a second information block is used for indicating at least one symbol from a periodic time window" comprises the following meaning: the second information block comprises one bitmap, any bit in the bitmap corresponds to one symbol in the periodic time window, and a symbol in the periodic time window corresponding to a bit with a bit value equal to "1" in the bitmap is a full duplex symbol (or a symbol may be used for both uplink and downlink). As one subsidiary embodiment of the above embodiment, a link direction of a symbol in the periodic time window corresponding to a bit with a bit value equal to "0" in the bitmap is provided by "tdd-UL-DL-ConfigCommon" or "tdd-UL-DL-ConfigDedicated". As one subsidiary embodiment of the above embodiment, a symbol in the periodic time window corresponding to a bit with a bit value equal to "0" in the bitmap is a downlink symbol or a flexible symbol. As one subsidiary embodiment of the above embodiment, any bit in the bitmap corresponds to a symbol in the periodic time window that is indicated as a downlink symbol or a flexible symbol by "tdd-UL-DL-ConfigCommon" or "tdd-UL-DL-ConfigDedicated". As one subsidiary embodiment of the above embodiment, the number of bits comprised in the bitmap is equal to the number of symbols comprised in the periodic time window. As one subsidiary embodiment of the above embodiment, the number of bits comprised in the bitmap is equal to the number of symbols corresponding to the reference subcarrier spacing that are comprised in the periodic time window, the reference subcarrier spacing is equal to a subcarrier spacing of an RB comprised in the first subband in the present application, or the reference subcarrier spacing is equal to a subcarrier spacing adopted in a time slot format configuration. As one subsidiary embodiment of the above embodiment, the number of bits comprised in the bitmap is equal to a positive integer multiple of the number of symbols comprised in the periodic time window and indicated as downlink symbols or flexible symbols by "tdd-UL-DL-ConfigCommon" or "tdd-UL-DL-ConfigDedicated". As one subsidiary embodiment of the above embodiment, the second information block is used for indicating at least one symbol per SCS from the periodic time window.

As one embodiment, the technical feature of "a second information block is used for indicating at least one symbol from a periodic time window" comprises the following meaning: the second information block comprises one bitmap, any bit in the bitmap corresponds to one symbol in the periodic time window, and a symbol in the periodic time window corresponding to a bit with a bit value equal to "0" in the bitmap is a full duplex symbol (or a symbol may be used for both uplink and downlink). As one subsidiary embodiment of the above embodiment, a link direction of a symbol in the periodic time window corresponding to a bit with a bit value equal to "1" in the bitmap is provided by "tdd-UL-DL-ConfigCommon" or "tdd-UL-DL-ConfigDedicated". As one subsidiary embodiment of the above embodiment, a symbol in the periodic time window corresponding to a bit with a bit value equal to "1" in the bitmap is a downlink symbol or a flexible symbol. As one subsidiary embodiment of the above embodiment, any bit in the bitmap corresponds to a symbol in the periodic time window that is indicated as a downlink symbol or a flexible symbol by "tdd-UL-DL-ConfigCommon" or "tdd-UL-DL-ConfigDedicated". As one subsidiary embodiment of the above embodiment, the number of bits comprised in the bitmap is equal to the number of symbols comprised in the periodic time window. As one subsidiary embodiment of the above embodiment, the number of bits comprised in the bitmap is equal to the number of symbols corresponding to the reference subcarrier spacing that are comprised in the periodic time window, the reference subcarrier spacing is equal to a subcarrier spacing of an RB comprised in the first subband in the present application, or the reference subcarrier spacing is equal to a subcarrier spacing adopted in a time slot format configuration. As one subsidiary embodiment of the above embodiment, the number of bits comprised in the bitmap is equal to a positive integer multiple of the number of symbols comprised in the periodic time window and indicated as downlink symbols or flexible symbols by "tdd-UL-DL-ConfigCommon" or "tdd-UL-DL-ConfigDedicated". As one subsidiary embodiment of the above embodiment, the second information block is used for indicating at least one symbol per SCS from the periodic time window.

As one embodiment, the technical feature of "a time length of the periodic time window is related to a time slot format configuration period length" comprises the following meaning: a time length of the periodic time window is equal to the time slot format configuration period length.

As one embodiment, the technical feature of "a time length of the periodic time window is related to a time slot format configuration period length" comprises the following meaning: the time slot format configuration period length is used for determining a time length of the periodic time window.

As one embodiment, the technical feature of "a time length of the periodic time window is related to a time slot format configuration period length" comprises the following meaning: a time length of the periodic time window is equal to a positive integral multiple that is greater than 1 of the time slot format configuration period length.

As one embodiment, the technical feature of "a time length of the periodic time window is related to a time slot format configuration period length" comprises the following meaning: a time length of the periodic time window is equal to the sum of a time slot format configuration period length provided by the pattern 1 and a time slot format configuration period length provided by the pattern 2.

As one embodiment, the technical feature of "a time length of the periodic time window is related to a time slot format configuration period length" comprises the following meaning: a time length of the periodic time window is equal to a positive integer multiple of the sum of a time slot format configuration period length provided by the pattern 1 and a time slot format configuration period length provided by the pattern 2.

As one embodiment, the technical feature of "a time length of the periodic time window is related to a time slot format configuration period length" comprises the following meaning: a time length of the periodic time window is equal to a positive integer multiple of the time slot format configuration period length, and the time length of the periodic time window being equal to a multiple of the time slot format configuration period length depends on the second information block.

As one embodiment, the technical feature of "a time length of the periodic time window is related to a time slot format configuration period length" comprises the following meaning: a time length of the periodic time window is equal to a positive integer multiple of the time slot format configuration period length, and the time length of the periodic time window being equal to a multiple of the time slot format configuration period length is related to a subcarrier spacing.

As one embodiment, the technical feature of "a time length of the periodic time window is related to a time slot format configuration period length" comprises the following meaning: a time length of the periodic time window is linearly related to the time slot format configuration period length.

As one embodiment, the technical feature of "a time length of the periodic time window is related to a time slot format configuration period length" comprises the following meaning: a time length of the periodic time window is linearly and proportionally related to the time slot format configuration period length.

As one embodiment, the technical feature of "a downlink symbol indicated by the first information block that does not overlap with a symbol indicated by the second information block belongs to the first-type symbol" comprises the following meaning: any downlink symbol indicated by the first information block that does not overlap with a symbol indicated by the second information block belongs to the first-type symbol.

As one embodiment, the technical feature of "a downlink symbol indicated by the first information block that does not overlap with a symbol indicated by the second information block belongs to the first-type symbol" comprises the following meaning: one downlink symbol indicated by the first information block that does not overlap with a symbol indicated by the second information block belongs to the first-type symbol.

As one embodiment, the technical feature of "a downlink symbol indicated by the first information block that does not overlap with a symbol indicated by the second information block belongs to the first-type symbol" comprises the following meaning: a downlink symbol indicated by the first information block that does not overlap with a symbol indicated by the second information block is the first-type symbol.

As one embodiment, the technical feature of "a downlink symbol indicated by the first information block that does not overlap with a symbol indicated by the second information block belongs to the first-type symbol" comprises the following meaning: the first-type symbol comprises a downlink symbol indicated by the first information block that does not overlap with a symbol indicated by the second information block.

As one embodiment, the technical feature of "a downlink symbol indicated by the first information block that does not overlap with a symbol indicated by the second information block belongs to the first-type symbol" comprises the following meaning: a downlink symbol indicated by the first information block that does not overlap with a full duplex symbol (or a symbol may be used for both uplink and downlink) indicated by the second information block belongs to the first-type symbol.

As one embodiment, the technical feature of "a downlink symbol indicated by the first information block that does not overlap with a symbol indicated by the second information block belongs to the first-type symbol" comprises the following meaning: a downlink symbol indicated by the first information block that does not overlap with a symbol for the first subband of the present application that is indicated by the second information block belongs to the first-type symbol.

As one embodiment, the technical feature of "a downlink symbol indicated by the first information block that does not overlap with a symbol indicated by the second information block belongs to the first-type symbol" comprises the following meaning: a downlink symbol indicated by the first information block that does not overlap with a symbol for a full duplex subband that is indicated by the second information block belongs to the first-type symbol.

As one embodiment, the technical feature of "a downlink symbol indicated by the first information block that does not overlap with a symbol indicated by the second information block belongs to the first-type symbol" comprises the following meaning: a downlink symbol indicated by the first information block that does not overlap with an SBFD symbol indicated by the second information block belongs to the first-type symbol.

As one embodiment, the technical feature of "a downlink symbol indicated by the first information block that does not overlap with a symbol indicated by the second information block belongs to the first-type symbol" comprises the following meaning: a downlink symbol indicated by the first information block that is orthogonal to a symbol indicated by the second information block in the time domain belongs to the first-type symbol.

As one embodiment, the technical feature of "a downlink symbol indicated by the first information block that does not overlap with a symbol indicated by the second information block belongs to the first-type symbol" comprises the following meaning: a downlink symbol indicated by the first information block that can only be used for downlink transmission belongs to the first-type symbol.

### Embodiment 9

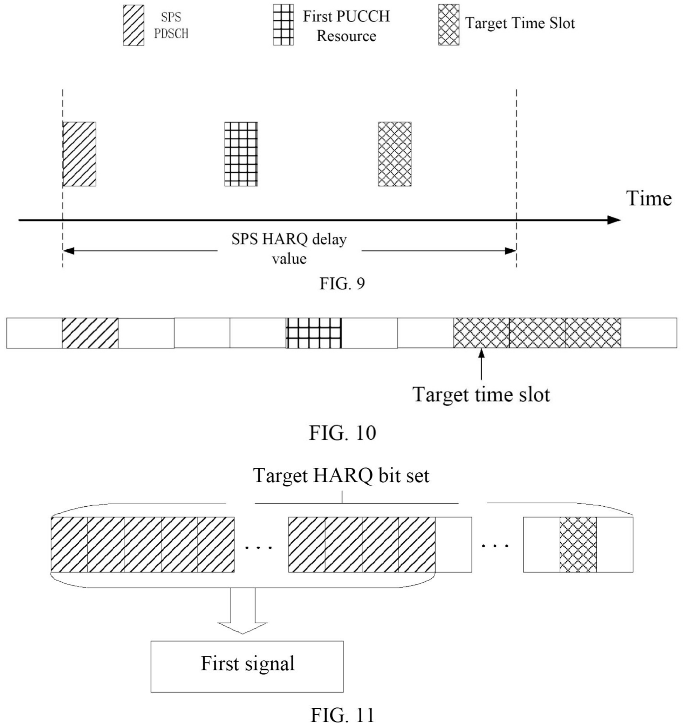

Embodiment 9 illustrates a schematic diagram of an SPS HARQ delay value according to one embodiment of the present application, as shown in FIG. 9. In FIG. 9, a horizontal axis represents time, a diagonal-line-filled rectangle represents a time slot of one SPS PDSCH, a crosshatch-filled rectangle represents a time slot to which a first PUCCH resource belongs in the time domain, a crisscross-filled rectangle represents a target time slot, and an interval between the SPS PDSCH and the target time slot is not greater than a corresponding SPS HARQ delay value.

In Embodiment 9, a third information block in the present application is used for determining an SPS HARQ delay value of at least one SPS PDSCH configuration, and an SPS HARQ delay value corresponding to a target HARQ bit set in the present application is equal to an SPS HARQ delay value of an SPS PDSCH configuration corresponding to the target HARQ bit set.

As one embodiment, an SPS HARQ delay value of one SPS PDSCH configuration is an SPS HARQ delay value corresponding to this SPS PDSCH configuration.

As one embodiment, an SPS HARQ delay value of one SPS PDSCH configuration is an SPS HARQ delay value adopted by this SPS PDSCH configuration.

As one embodiment, an SPS HARQ delay value of one SPS PDSCH configuration is an SPS HARQ delay value indicated by this SPS PDSCH configuration.

As one embodiment, an SPS HARQ delay value of one SPS PDSCH configuration is an SPS HARQ delay value configured for this SPS PDSCH configuration.

As one embodiment, an SPS HARQ delay value of one SPS PDSCH configuration is an SPS HARQ delay value comprised in this SPS PDSCH configuration.

As one embodiment, the technical feature of "a third information block is used for determining an SPS HARQ delay value of at least one SPS PDSCH configuration" comprises the following meaning: the third information block is used for determining an SPS HARQ delay value of at least one SPS PDSCH configuration by a first node device in the present application.

As one embodiment, the technical feature of "a third information block is used for determining an SPS HARQ delay value of at least one SPS PDSCH configuration" comprises the following meaning: all or part comprised in the third information block are or is used for explicitly or implicitly indicating an SPS HARQ delay value of at least one SPS PDSCH configuration.

As one embodiment, the technical feature of "a third information block is used for determining an SPS HARQ delay value of at least one SPS PDSCH configuration" comprises the following meaning: the third information block is used for determining SPS HARQ delay values respectively corresponding to a plurality of SPS PDSCH configurations.

As one embodiment, the technical feature of "a third information block is used for determining an SPS HARQ delay value of at least one SPS PDSCH configuration" comprises the following meaning: the third information block is used for determining an SPS HARQ delay value corresponding to only one SPS PDSCH configuration.

As one embodiment, the technical feature of "a third information block is used for determining an SPS HARQ delay value of at least one SPS PDSCH configuration" comprises the following meaning: the third information block is used for determining the number of time slots or sub-time slots corresponding to an SPS HARQ delay value of at least one SPS PDSCH configuration.

As one embodiment, the technical feature of "a third information block is used for determining an SPS HARQ delay value of at least one SPS PDSCH configuration" comprises the following meaning: the third information block is used for indicating one SPS HARQ delay value for each SPS PDSCH configuration.

As one embodiment, the technical feature of "a third information block is used for determining an SPS HARQ delay value of at least one SPS PDSCH configuration" comprises the following meaning: the third information block is used for determining an absolute duration of an SPS HARQ delay value of at least one SPS PDSCH configuration.

As one embodiment, the technical feature of "an SPS HARQ delay value corresponding to a target HARQ bit set is equal to an SPS HARQ delay value of an SPS PDSCH configuration corresponding to the target HARQ bit set" comprises the following meaning: one SPS HARQ delay value corresponding to the target HARQ bit set is equal to an SPS HARQ delay value of one SPS PDSCH configuration corresponding to the target HARQ bit set.

As one embodiment, the technical feature of "an SPS HARQ delay value corresponding to a target HARQ bit set is equal to an SPS HARQ delay value of an SPS PDSCH configuration corresponding to the target HARQ bit set" comprises the following meaning: the SPS HARQ delay value corresponding to the target HARQ bit set is an SPS HARQ delay value of an SPS PDSCH configuration corresponding to the target HARQ bit set.

As one embodiment, the technical feature of "an SPS HARQ delay value corresponding to a target HARQ bit set is equal to an SPS HARQ delay value of an SPS PDSCH configuration corresponding to the target HARQ bit set" comprises the following meaning: the SPS HARQ delay value corresponding to the target HARQ bit set is an SPS HARQ delay value of an SPS PDSCH configuration corresponding to one HARQ-ACK bit comprised in the target HARQ bit set.

As one embodiment, the technical feature of "an SPS HARQ delay value corresponding to a target HARQ bit set is equal to an SPS HARQ delay value of an SPS PDSCH configuration corresponding to the target HARQ bit set" comprises the following meaning: the SPS HARQ delay values corresponding to the target HARQ bit set are SPS HARQ delay values respectively configured for all SPS PDSCH configurations corresponding to all HARQ-ACK bits comprised in the target HARQ bit set.

As one embodiment, the technical feature of "an SPS HARQ delay value corresponding to a target HARQ bit set is equal to an SPS HARQ delay value of an SPS PDSCH configuration corresponding to the target HARQ bit set" comprises the following meaning: the SPS HARQ delay value corresponding to the target HARQ bit set is an SPS HARQ delay value of an SPS PDSCH configuration corresponding to any HARQ-ACK bit comprised in the target HARQ bit set.

As one embodiment, the technical feature of "an SPS HARQ delay value corresponding to a target HARQ bit set is equal to an SPS HARQ delay value of an SPS PDSCH configuration corresponding to the target HARQ bit set" comprises the following meaning: the SPS HARQ delay value corresponding to the target HARQ bit set is an SPS HARQ delay value of an SPS PDSCH configuration to which an SPS PDSCH, for which any HARQ-ACK bit comprised in the target HARQ bit set is, belongs.

As one embodiment, the technical feature of "an SPS HARQ delay value corresponding to a target HARQ bit set is equal to an SPS HARQ delay value of an SPS PDSCH configuration corresponding to the target HARQ bit set" comprises the following meaning: the SPS HARQ delay value corresponding to the target HARQ bit set is an SPS HARQ delay value configured by an SPS PDSCH configuration to which an SPS PDSCH, for which any HARQ-ACK bit comprised in the target HARQ bit set is, belongs.

### Embodiment 10

Embodiment 10 illustrates a schematic diagram of a target time slot according to one embodiment of the present application, as shown in FIG. 10. In FIG. 10, each rectangle represents one time slot, a diagonal-line-filled rectangle represents a time slot of one SPS PDSCH, a crosshatch-filled rectangle represents a time slot to which a first PUCCH resource belongs in the time domain, each crisscross-filled rectangle represents a time slot that can multiplex at least one bit from a first HARQ bit set, and an earliest crisscross-filled rectangle represents the target time slot.

In Embodiment 10, the target time slot in the present application is an earliest time slot that multiplexes at least one bit from the first HARQ bit set.

As one embodiment, the technical feature of "the target time slot is an earliest time slot that multiplexes at least one bit from the first HARQ bit set" comprises the following meaning: the target time slot is an earliest time slot that can multiplex at least one bit from the first HARQ bit set.

As one embodiment, the technical feature of "the target time slot is an earliest time slot that multiplexes at least one bit from the first HARQ bit set" comprises the following meaning: the target time slot is an earliest time slot that can transmit a PUSCH or PUCCH that multiplexes or carries at least one bit from the first HARQ bit set.

As one embodiment, the technical feature of "the target time slot is an earliest time slot that multiplexes at least one bit from the first HARQ bit set" comprises the following meaning: the target time slot is an earliest time slot that can be occupied in the time domain by a PUSCH or PUCCH that multiplexes or carries at least one bit from the first HARQ bit set.

As one embodiment, the technical feature of "the target time slot is an earliest time slot that multiplexes at least one bit from the first HARQ bit set" comprises the following meaning: the target time slot is an earliest time slot that is later than the first PUCCH resource and can be occupied in the time domain by a PUSCH or PUCCH that multiplexes or carries at least one bit from the first HARQ bit set.

As one embodiment, the technical feature of "the target time slot is an earliest time slot that multiplexes at least one bit from the first HARQ bit set" comprises the following meaning: the target time slot is an earliest time slot that is later than the first PUCCH resource and comprises a PUCCH resource in the time domain.

As one embodiment, the technical feature of "the target time slot is an earliest time slot that multiplexes at least one bit from the first HARQ bit set" comprises the following meaning: the target time slot is an earliest time slot that is later than the first PUCCH resource and comprises a PUCCH resource for an SPS PDSCH in the time domain.

As one embodiment, the technical feature of "the target time slot is the earliest time slot that multiplexes at least one bit from the first HARQ bit set" comprises the following meaning: the target time slot is an earliest time slot that multiplexes at least one bit for an SPS PDSCH from the first HARQ bit set.

As one embodiment, the technical feature of "the target time slot is the earliest time slot that multiplexes at least one bit from the first HARQ bit set" comprises the following meaning: the target time slot is an earliest time slot that is later than the first PUCCH resource and can be occupied in the time domain by a PUSCH or PUCCH that multiplexes or carries at least one HARQ-ACK bit for an SPS PDSCH from the first HARQ bit set.

### Embodiment 11

Embodiment 11 illustrates a schematic diagram of a first HARQ-ACK bit according to one embodiment of the present application, as shown in FIG. 11. In FIG. 11, each rectangle represents one bit in a target HARQ bit set, a diagonal-line-filled rectangle is a bit carried by a first signal, and a crisscross-filled rectangle represents the first HARQ-ACK bit.

In Embodiment 11, the first HARQ-ACK bit is one HARQ-ACK bit comprised in the target HARQ bit set, an HARQ process to which the first HARQ-ACK bit belongs is associated with one PDSCH that is earlier than the first signal, and the first signal carries HARQ-ACK bits other than the first HARQ-ACK bit.

As one embodiment, the first HARQ-ACK bit may be any HARQ-ACK bit comprised in the target HARQ bit set.

As one embodiment, the first HARQ-ACK bit is one given HARQ-ACK bit comprised in the target HARQ bit set.

As one embodiment, an HARQ process to which the first HARQ-ACK bit belongs is an HARQ process for which the first HARQ-ACK bit is.

As one embodiment, an HARQ process to which the first HARQ-ACK bit belongs is an HARQ process corresponding to the first HARQ-ACK bit.

As one embodiment, an HARQ process to which the first HARQ-ACK bit belongs is an HARQ process to which (for which) a PDSCH that is for the first HARQ-ACK bit belongs (or is configured).

As one embodiment, an HARQ process to which the first HARQ-ACK bit belongs is an HARQ process to which (for which) a PDSCH that is for the first HARQ-ACK bit and provides one TB belongs (or is configured).

As one embodiment, an HARQ process to which the first HARQ-ACK bit belongs is an HARQ process to which (for which) a decoded TB on which the generation of the first HARQ-ACK bit is based belongs (or is configured).

As one embodiment, an HARQ process to which the first HARQ-ACK bit belongs is an HARQ process to which (for which) a TB for which the first HARQ-ACK bit is used for determining whether decoding is correct belongs (or is configured).

As one embodiment, the technical feature of "an HARQ process to which the first HARQ-ACK bit belongs is associated with one PDSCH that is earlier than the first signal" comprises the following meaning: an HARQ process to which the first HARQ-ACK bit belongs is the same as an HARQ process associated with one PDSCH that is earlier than the first signal.

As one embodiment, the technical feature of "an HARQ process to which the first HARQ-ACK bit belongs is associated with one PDSCH that is earlier than the first signal" comprises the following meaning: an HARQ process to which (or by which, or for which) one PDSCH that is earlier than the first signal belongs (or is for, or is configured) is the same HARQ process as an HARQ process to which the first HARQ-ACK bit belongs.

As one embodiment, the technical feature of "an HARQ process to which the first HARQ-ACK bit belongs is associated with one PDSCH that is earlier than the first signal" comprises the following meaning: an HARQ process to which the first HARQ-ACK bit belongs is the same as an HARQ process to which (or by which or for which) a TB provided by one PDSCH that is earlier than the first signal belongs (or is for, or is configured).

As one embodiment, the technical feature of "an HARQ process to which the first HARQ-ACK bit belongs is associated with one PDSCH that is earlier than the first signal" comprises the following meaning: a TB provided by one PDSCH that is earlier than the first signal and the first HARQ-ACK bit belong to (or for, or are configured with) a same HARQ process.

As one embodiment, the technical feature of "an HARQ process to which the first HARQ-ACK bit belongs is associated with one PDSCH that is earlier than the first signal" comprises the following meaning: a TB provided by one PDSCH that is earlier than the first signal and a TB for the first HARQ-ACK bit belong to (or are configured with) a same HARQ process.

As one embodiment, the technical feature of "the first signal carries HARQ-ACK bits other than the first HARQ-ACK bit" comprises the following meaning: information bits carried by the first signal do not comprise the first HARQ-ACK bit.

As one embodiment, the technical feature of "the first signal carries HARQ-ACK bits other than the first HARQ-ACK bit" comprises the following meaning: information bits for generating the first signal do not comprise the first HARQ-ACK bit.

As one embodiment, the technical feature of "the first signal carries HARQ-ACK bits other than the first HARQ-ACK bit" comprises the following meaning: information bits of an HARQ-ACK do not comprise the first HARQ-ACK bit.

As one embodiment, the technical feature of "the first signal carries HARQ-ACK bits other than the first HARQ-ACK bit" comprises the following meaning: HARQ-ACK information bits multiplexed or mapped onto the first signal do not comprise the first HARQ-ACK bit.

As one embodiment, the technical feature of "the first signal carries HARQ-ACK bits other than the first HARQ-ACK bit" comprises the following meaning: the first signal carries only HARQ-ACK bits other than the first HARQ-ACK bit.

As one embodiment, the technical feature of "the first signal carries HARQ-ACK bits other than the first HARQ-ACK bit" comprises the following meaning: the first signal does not carry the first HARQ-ACK bit.

### Embodiment 12

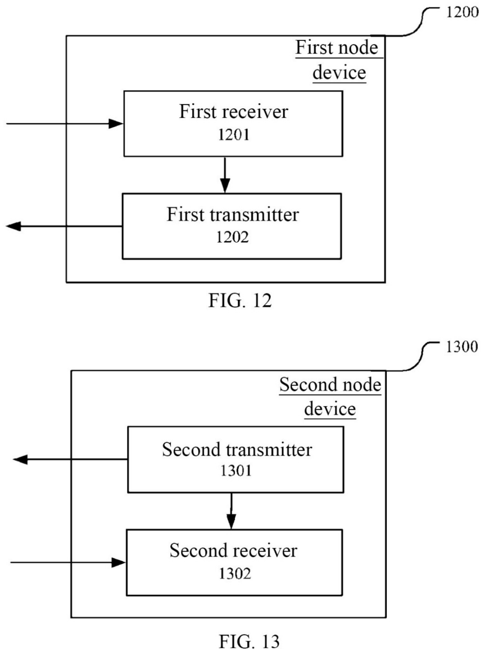

Embodiment 12 illustrates a structural block diagram of a processing apparatus in a first node device of one embodiment, as shown in FIG. 12. In FIG. 12, a processing apparatus 1200 of the first node device comprises a first receiver 1201 and a first transmitter 1202. The first receiver 1201 comprises a transmitting device/receiving device 456 (comprising an antenna 460), a receiving processor 452, and a controller/processor 490 in FIG. 4 of the present application; and the first transmitter 1202 comprises the transmitting device/receiving device 456 (comprising the antenna 460), a transmitting processor 455, and the controller/processor 490 in FIG. 4 of the present application.

In Embodiment 12, the first receiver 1201 receives a first information block and receives a second information block, the first information block being used for indicating at least one downlink symbol; and the first transmitter 1202 sends a first signal in a target time slot, the first signal being used for carrying at least one HARQ-ACK bit comprised in a target HARQ bit set, wherein the at least one HARQ-ACK bit comprised in the target HARQ bit set belongs to a first HARQ bit set, and the first HARQ bit set comprises at least one HARQ-ACK bit for an SPS PDSCH; a first PUCCH resource is a PUCCH resource determined for the first HARQ bit set; the first PUCCH resource overlaps with one first-type symbol, and whether the at least one downlink symbol indicated by the first information block belongs to the first-type symbol depends on the second information block; and an SPS HARQ delay value corresponding to the target HARQ bit set is not less than a time interval length between the target time slot and a receiving time slot of a corresponding SPS PDSCH.

As one embodiment, the second information block is used for determining a first subband, and the first subband comprises at least one resource block; and the at least one downlink symbol indicated by the first information block is used for uplink transmission in the first subband.

As one embodiment, the first signal does not overlap with any downlink symbol other than the first-type symbol as indicated by the first information block, the first signal does not overlap with any SS/PBCH block symbol, and the first signal does not overlap with any control resource set symbol associated with a type-0 common search space set.

As one embodiment, the second information block is used for indicating at least one symbol from a periodic time window, the periodic time window comprises a plurality of consecutive symbols, and a time length of the periodic time window is related to a time slot format configuration period length; and a downlink symbol indicated by the first information block that does not overlap with a symbol indicated by the second information block belongs to the first-type symbol.

As one embodiment, the first receiver 1201 receives a third information block, wherein the third information block is used for determining an SPS HARQ delay value of at least one SPS PDSCH configuration, and the SPS HARQ delay value corresponding to the target HARQ bit set is equal to an SPS HARQ delay value of an SPS PDSCH configuration corresponding to the target HARQ bit set.

As one embodiment, the target time slot is an earliest time slot that multiplexes at least one bit from the first HARQ bit set.

As one embodiment, the first HARQ-ACK bit is one HARQ-ACK bit comprised in the target HARQ bit set, an HARQ process to which the first HARQ-ACK bit belongs is associated with one PDSCH that is earlier than the first signal, and the first signal carries HARQ-ACK bits other than the first HARQ-ACK bit.

### Embodiment 13

Embodiment 13 illustrates a structural block diagram of a processing apparatus in a second node device of one embodiment, as shown in FIG. 13. In FIG. 13, a processing apparatus 1300 of the second node device comprises a second transmitter 1301 and a second receiver 1302. The second transmitter 1301 comprises a transmitting device/receiving device 416 (comprising an antenna 460), a transmitting processor 415, and a controller/processor 440 in FIG. 4 of the present application; and the second receiver 1302 comprises the transmitting device/receiving device 416 (comprising the antenna 460), a receiving processor 412, and the controller/processor 440 in FIG. 4 of the present application.

In Embodiment 13, the second transmitter 1301 sends a first information block and sends a second information block, the first information block being used for indicating at least one downlink symbol; and the second receiver 1302 receives a first signal in a target time slot, the first signal being used for carrying at least one HARQ-ACK bit comprised in a target HARQ bit set, wherein the at least one HARQ-ACK bit comprised in the target HARQ bit set belongs to a first HARQ bit set, and the first HARQ bit set comprises at least one HARQ-ACK bit for an SPS PDSCH; a first PUCCH resource is a PUCCH resource determined for the first HARQ bit set; the first PUCCH resource overlaps with one first-type symbol, and whether the at least one downlink symbol indicated by the first information block belongs to the first-type symbol depends on the second information block; and an SPS HARQ delay value corresponding to the target HARQ bit set is not less than a time interval length between the target time slot and a receiving time slot of a corresponding SPS PDSCH.

As one embodiment, the second information block is used for determining a first subband, and the first subband comprises at least one resource block; and the at least one downlink symbol indicated by the first information block is used for uplink transmission in the first subband.

As one embodiment, the first signal does not overlap with any downlink symbol other than the first-type symbol as indicated by the first information block, the first signal does not overlap with any SS/PBCH block symbol, and the first signal does not overlap with any control resource set symbol associated with a type-0 common search space set.

As one embodiment, the second information block is used for indicating at least one symbol from a periodic time window, the periodic time window comprises a plurality of consecutive symbols, and a time length of the periodic time window is related to a time slot format configuration period length; and a downlink symbol indicated by the first information block that does not overlap with a symbol indicated by the second information block belongs to the first-type symbol.

As one embodiment, the second transmitter 1301 sends a third information block, wherein the third information block is used for determining an SPS HARQ delay value of at least one SPS PDSCH configuration, and the SPS HARQ delay value corresponding to the target HARQ bit set is equal to an SPS HARQ delay value of an SPS PDSCH configuration corresponding to the target HARQ bit set.

As one embodiment, the target time slot is an earliest time slot that multiplexes at least one bit from the first HARQ bit set.

As one embodiment, the first HARQ-ACK bit is one HARQ-ACK bit comprised in the target HARQ bit set, an HARQ process to which the first HARQ-ACK bit belongs is associated with one PDSCH that is earlier than the first signal, and the first signal carries HARQ-ACK bits other than the first HARQ-ACK bit.

Those ordinarily skilled in the art may understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of software function modules, and the present application is not limited to any specific form of software and hardware combination. A first node device or the second node device or UE or the terminal in the present application includes but is not limited to mobile phones, tablet computers, notebook computers, network access cards, low-power devices, eMTC devices, NB-IoT devices, vehicle-mounted communication devices, aircrafts, airplanes, drones, remote-controlled airplanes, test apparatuses, test devices, test instrumentations, and other devices. The base station device or base station or network-side device in the present application includes but is not limited to macrocellular base stations, microcellular base stations, Femtocells, relay base stations, eNBs, gNBs, transmitter receiver points (TRPs), relay satellites, satellite base stations, air base stations, test apparatuses, test devices, test instrumentation, and other devices.

Those skilled in the art should understand that the present invention may be implemented in other specified forms without departing from its core or basic features. Therefore, the embodiments disclosed at present should be regarded as descriptive rather than restrictive in any way. The scope of the invention is determined by the appended claims rather than the preceding description, and all changes within their equivalent meanings and areas are deemed to be comprised therein.

## Claims

1. A first node device for wireless communication, **characterized in that** it comprises:
a first receiver receiving a first information block and receiving a second information block, the first information block being used for indicating at least one downlink symbol; and
a first transmitter sending a first signal in a target time slot, the first signal being used for carrying at least one HARQ-ACK bit comprised in a target HARQ bit set,
wherein the at least one HARQ-ACK bit comprised in the target HARQ bit set belongs to a first HARQ bit set, and the first HARQ bit set comprises at least one HARQ-ACK bit for an SPS PDSCH; a first PUCCH resource is a PUCCH resource determined for the first HARQ bit set; the first PUCCH resource overlaps with one first-type symbol, and whether the at least one downlink symbol indicated by the first information block belongs to the first-type symbol depends on the second information block; and an SPS HARQ delay value corresponding to the target HARQ bit set is not less than a time interval length between the target time slot and a receiving time slot of a corresponding SPS PDSCH.

2. The first node device according to claim 1, **characterized in that** the second information block is used for determining a first subband, and the first subband comprises at least one resource block; and the at least one downlink symbol indicated by the first information block is used for uplink transmission in the first subband.

3. The first node device according to claim 1 or 2, **characterized in that** the first signal does not overlap with any downlink symbol other than the first-type symbol indicated by the first information block, the first signal does not overlap with any SS/PBCH block symbol, and the first signal does not overlap with any control resource set symbol associated with a type-0 common search space set.

4. The first node device according to any one of claims 1 to 3, **characterized in that** the second information block is used for indicating at least one symbol from a periodic time window, the periodic time window comprises a plurality of consecutive symbols, and a time length of the periodic time window is related to a time slot format configuration period length; and downlink symbols indicated by the first information block that do not overlap with symbols indicated by the second information block belong to the first-type symbol.

5. The first node device according to any one of claims 1 to 4, **characterized in that** the first receiver receives a third information block, wherein the third information block is used for determining an SPS HARQ delay value of at least one SPS PDSCH configuration, and the SPS HARQ delay value corresponding to the target HARQ bit set is equal to an SPS HARQ delay value of an SPS PDSCH configuration corresponding to the target HARQ bit set.

6. The first node device according to any one of claims 1 to 5, **characterized in that** the target time slot is the earliest time slot that multiplexes at least one bit from the first HARQ bit set.

7. The first node device according to any one of claims 1 to 6, **characterized in that** a first HARQ-ACK bit is one HARQ-ACK bit comprised in the target HARQ bit set, an HARQ process to which the first HARQ-ACK bit belongs is associated with one PDSCH that is earlier than the first signal, and the first signal carries an HARQ-ACK bit other than the first HARQ-ACK bit.

8. A second node device for wireless communication, **characterized in that** it comprises:
a second transmitter sending a first information block and sending a second information block, the first information block being used for indicating at least one downlink symbol; and
a second receiver receiving a first signal in a target time slot, the first signal being used for carrying at least one HARQ-ACK bit comprised in a target HARQ bit set,
wherein the at least one HARQ-ACK bit comprised in the target HARQ bit set belongs to a first HARQ bit set, and the first HARQ bit set comprises at least one HARQ-ACK bit for an SPS PDSCH; a first PUCCH resource is a PUCCH resource determined for the first HARQ bit set; the first PUCCH resource overlaps with one first-type symbol, and whether the at least one downlink symbol indicated by the first information block belongs to the first-type symbol depends on the second information block; and an SPS HARQ delay value corresponding to the target HARQ bit set is not less than a time interval length between the target time slot and a receiving time slot of a corresponding SPS PDSCH.

9. A method used in a first node for wireless communication, **characterized in that** it comprises:
receiving a first information block and receiving a second information block, the first information block being used for indicating at least one downlink symbol; and
sending a first signal in a target time slot, the first signal being used for carrying at least one HARQ-ACK bit comprised in a target HARQ bit set,
wherein the at least one HARQ-ACK bit comprised in the target HARQ bit set belongs to a first HARQ bit set, and the first HARQ bit set comprises at least one HARQ-ACK bit for an SPS PDSCH; a first PUCCH resource is a PUCCH resource determined for the first HARQ bit set; the first PUCCH resource overlaps with one first-type symbol, and whether the at least one downlink symbol indicated by the first information block belongs to the first-type symbol depends on the second information block; and an SPS HARQ delay value corresponding to the target HARQ bit set is not less than a time interval length between the target time slot and a receiving time slot of a corresponding SPS PDSCH.

10. A method used in a second node for wireless communication, **characterized in that** it comprises:
sending a first information block and sending a second information block, the first information block being used for indicating at least one downlink symbol; and
receiving a first signal in a target time slot, the first signal being used for carrying at least one HARQ-ACK bit comprised in a target HARQ bit set,
wherein the at least one HARQ-ACK bit comprised in the target HARQ bit set belongs to a first HARQ bit set, and the first HARQ bit set comprises at least one HARQ-ACK bit for an SPS PDSCH; a first PUCCH resource is a PUCCH resource determined for the first HARQ bit set; the first PUCCH resource overlaps with one first-type symbol, and whether the at least one downlink symbol indicated by the first information block belongs to the first-type symbol depends on the second information block; and an SPS HARQ delay value corresponding to the target HARQ bit set is not less than a time interval length between the target time slot and a receiving time slot of a corresponding SPS PDSCH.
